(19)

Europäisches
Patentamt

European
Patent Office

Office européen
des brevets

(11) **EP 4 592 592 A1**

(12) **EUROPEAN PATENT APPLICATION**
published in accordance with Art. 153(4) EPC

(43) Date of publication:
**30.07.2025 Bulletin 2025/31**

(21) Application number: **23867483.2**

(22) Date of filing: **19.09.2023**

(51) International Patent Classification (IPC):
**F22B 35/18** $^{(2006.01)}$

(52) Cooperative Patent Classification (CPC):
**Y02E 30/00**

(86) International application number:
**PCT/CN2023/119624**

(87) International publication number:
**WO 2024/061196 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022   CN 202211138332**

(71) Applicant: **Shanghai Nuclear Engineering
Research &
Design Institute Co., Ltd.
Shanghai 200233 (CN)**

(72) Inventors:
• **ZHANG, Yicheng
Shanghai 200233 (CN)**
• **TANG, Lichen
Shanghai 200233 (CN)**

• **LIU, Chang
Shanghai 200233 (CN)**
• **YING, Bingbin
Shanghai 200233 (CN)**
• **ZHANG, Wei
Shanghai 200233 (CN)**
• **ZHANG, Xingliang
Shanghai 200233 (CN)**
• **HUANG, Jun
Shanghai 200233 (CN)**
• **YAO, Yangui
Shanghai 200233 (CN)**
• **LI, Chen
Shanghai 200233 (CN)**
• **DENG, Jingjing
Shanghai 200233 (CN)**

(74) Representative: **Rebbereh, Cornelia
Kölner Straße 18
51789 Lindlar (DE)**

(54) **INTELLIGENT MONITORING METHOD AND SYSTEM FOR NUCLEAR POWER STATION STEAM GENERATOR**

(57)    The present invention provides an intelligent monitoring method and system for a steam generator of a nuclear power plant. The system comprises a device thermal performance monitoring module, a device flow field digital twin module, a heat transfer tube flow-induced vibration monitoring module, a heat transfer tube wear monitoring module, a device fatigue damage monitoring module, a device loose-component monitoring module, and a monitoring data and file management module, can be used for thermal performance monitoring, local flow field monitoring, heat transfer tube flow-induced vibration and wear evaluation, and fatigue and loose component monitoring and diagnosis of the steam generator, and is used for the full life cycle management of the steam generator. During the installation of the system, no new sensor is added, so that the installation is simpler and more convenient. At the same time, the system can monitor a fouling coefficient, a flow field distribution condition and other data that cannot be monitored previously, and predict the wear condition of the heat transfer tube, so that the time required for maintenance of the steam generator is greatly shortened, and the economic benefit of the nuclear power plant is improved.

EP 4 592 592 A1

Figure 1

## Description

### TECHNICAL FIELD

The present invention relates to the technical field of monitoring a nuclear reactor of a nuclear power plant, and more specifically, to an intelligent monitoring method and system for a steam generator in a nuclear reactor of a nuclear power plant.

### BACKGROUND

Statements in this section merely provide background information related to the present invention and do not necessarily constitute the prior art.

In a nuclear reactor, a core of nuclear material is confined to a small volume inside the nuclear reactor, so that nuclear reactions can occur. In many instances, controlled nuclear reactions can continue for extended periods of time, such as several years, before the nuclear reactor core needs to be refueled. Therefore, when a properly designed nuclear reactor is used as a heat source to convert water into steam, it can provide a carbon-free, stable and highly reliable energy source.

Currently, nuclear reactors utilize working fluids, such as water, which are converted to steam at pressures significantly higher than atmospheric pressure, the pressurized steam is then used to drive a turbine that converts mechanical energy into electrical energy, and finally the steam is condensed back into water and returned to the nuclear reactor. In many nuclear reactors, the cycle composed of evaporation of the working fluid, driving by work, and condensation continues day after day and year after year.

The steam generator is one of important apparatuses of the nuclear reactor. The steam generator receives liquid coolant, such as water, on its input side and exposes the liquid coolant to the heat source of the nuclear reactor, so that the liquid coolant evaporates to provide pressurized gasified coolant to the input side of the turbine. The steam generator is very important for the safe operation of the entire nuclear power plant, and whether it operates normally directly affects the safety, economy and reliability of the operation of the nuclear power plant. Therefore, the efficiency, performance and safety characteristics of the steam generator need to be continuously investigated, analyzed and evaluated.

According to the failure modal analysis of steam generators, the main faults are substandard outlet steam parameters (such as humidity, pressure, etc.), heat transfer tube damage, component fatigue, falling off of loose component, etc. The existing steam generator monitoring system only monitors a single fault content, such as fatigue monitoring or heat transfer tube damage monitoring, and in actual use, the monitoring systems need to be switched frequently, which is cumbersome to operate.

In the past operation of steam generators, it was found that flow-induced vibration was one of the important reasons for the wear of the heat transfer tubes of steam generators. However, due to the difficulty in measuring the flow field distribution condition inside the steam generator, for the thermal hydraulic data such as the fouling coefficient of the steam generator, the monitoring means on the wear condition of the heat transfer tubes of the steam generator is lacked. As a result, a lot of time had to be spent on non-destructive testing of the heat transfer tubes of steam generators of nuclear power plants during each overhaul, which seriously affected the economic benefits of nuclear power plants.

In addition, most of the existing steam generator monitoring systems require adding new sensors to the steam generators, which makes it very difficult to install new monitoring systems in old power plants. For example, when in use, newly installing sensors requires a certain degree of destruction of the pressure bearing boundary, and safety issues such as electromagnetic compatibility caused by the sensor routing need to be reconsidered, which makes actual use and installation difficult.

### SUMMARY

In order to solve the above problems, the present invention proposes a fully functional intelligent monitoring method and system for a steam generator of a nuclear power plant, including thermal performance monitoring, local flow field monitoring, flow-induced vibration and wear evaluation of the heat transfer tubes, and fatigue and loose component monitoring and diagnosis of the steam generator, so as to manage the steam generator throughout its life cycle and improve the safety and reliability of the operation of the steam generator.

According to some embodiments, the present invention employs the following technical solutions.

An intelligent monitoring method for a steam generator of a nuclear power plant, including the following steps:

acquiring data from several sensor measure points in the steam generator;
performing thermal performance calculation on the data acquired from each sensor measure point, and outputting secondary side data after calculation;

comparing the secondary side data output after calculation with a measured value of steam at a secondary side outlet to determine whether a potential fault exists in an operation process of the steam generator;

performing flow field distribution calculation on the secondary side data output after the thermal performance calculation, calculating a secondary side flow field of a tube bundle area of the steam generator, and outputting flow field data after calculation;

performing a flow-induced vibration analysis of a heat transfer tube on the secondary side data output after the thermal performance calculation and the output flow field data acquired after the flow field calculation to acquire by calculation a result of the flow-induced vibration analysis, wherein the result of the flow-induced vibration analysis includes but is not limited to effective flow velocities, critical flow velocities, damping ratios, and fluid-elasticity stability ratios (a ratio of effective flow velocity to critical flow velocity) of a straight tube-section and a bent tube-section of the heat transfer tube; and

performing a prediction analysis with a wear prediction algorithm on a subsequent wear condition of the heat transfer tube, and providing a recommended method for tube blockage,

all data being allowed to be visualized.

Furthermore, the data of each sensor measure point includes but is not limited to thermal power, as well as temperature, pressure, and flow rate of a primary circuit, and water level, feedwater temperature, outlet steam pressure, flow rate, and blowdown flow rate of the secondary side. Furthermore, the secondary side data output after the thermal performance calculation includes secondary side steam space pressure, secondary side inlet flow rate and temperature, and secondary side heat exchange amount distribution data, and more specifically, the output data includes but is not limited to outlet steam pressure, flow rate, fouling coefficient, circulation ratio, the secondary side heat exchange amount, as well as pressures, flow rates and temperatures of a primary side and the secondary side.

Furthermore, input data of the flow field distribution calculation includes inlet and outlet parameters of the steam generator, as well as secondary side steam pressure, secondary side inlet flow rate and temperature, secondary side heat exchange amount distribution data, circulation ratio, steam space pressure, and descending channel inlet temperature acquired by the thermal performance calculation; and the output data of the flow field distribution calculation includes but is not limited to distribution results of the secondary side flow field and a temperature field. Furthermore, the flow field distribution calculation includes following specific steps:

firstly, calculating flow field data of the steam generator under different input data in advance as sample data;

secondly, performing flow mode decomposition based on the sample data to acquire by calculation a finite-order orthogonal basis as a flow mode;

thirdly, acquiring by calculation a new orthogonal basis by Kelkien interpolation or inverse distance interpolation according to the secondary side data output after the thermal performance calculation; and

fourthly, recombining the flow modes to acquire by calculation the distribution results of the secondary side flow field and the temperature field.

Furthermore, the flow-induced vibration analysis specifically includes following steps:

firstly, establishing a heat transfer tube analysis model according to a result of the flow field data;

secondly, performing a modal analysis based on a built-in solver;

thirdly, performing calculation of the fluid-elasticity stability ratio to acquire a calculation result of the fluid-elasticity stability ratio, including but not limited to the effective flow velocity, the critical flow velocity, the damping ratio, and the fluid-elasticity stability ratio;

fourthly, calculating turbulence excitation to acquire a calculation result of the turbulence excitation, including but not limited to displacement and stress; and

fifthly, calculating vortex shedding to acquire a calculation result of vortex shedding amount, including but not limited to displacement and stress.

Furthermore, the intelligent monitoring method further includes:

determining a position of a loose component in the steam generator according to imported loose component signals of respective positions in the steam generator; and

consulting data files, which include but are not limited to relevant data of the steam generator in design, manufacturing and operation stages.

Furthermore, the thermal performance calculation includes the heat exchange fouling coefficient calculation of the primary and secondary sides of the heat transfer tube. The input data for the fouling coefficient calculation includes structural parameters, primary side flow rate, primary side inlet temperature (or outlet temperature, average temperature), primary side pressure, steam pressure, heat load, and feedwater temperature of the steam generator, and the output data for the fouling coefficient calculation is the heat exchange fouling coefficient of the primary and secondary sides of the heat transfer tube.

Furthermore, the specific steps of the fouling coefficient calculation are as follows:

firstly, calculating the thermal power delivered by a nuclear reactor coolant through a heat transfer equation of $P_t = q_{m,p}$ ($h_{in} - h_{out}$), wherein $P_t$ is the thermal power delivered by the nuclear reactor coolant, in kW; $q_{m,p}$ is the mass flow rate of the coolant in the primary circuit, in kg/s; and $h_{in}$, $h_{out}$ are the specific enthalpy of the nuclear reactor coolant when entering and leaving the steam generator, respectively, in kJ/kg;

secondly, calculating the thermal resistance of tube wall by the following equation:

$$R_W = \frac{d_{ca}}{2\lambda_w} \ln \frac{d_o}{d_i} \,,$$

wherein $\lambda_w$ is the thermal conductivity of the material of the heat transfer tube, in $W/(m \cdot K)$; and $d_i$, $d_o$, $d_{ca}$ are the inner diameter, outer diameter and calculated diameter of the heat transfer tube, respectively, in m;

next, calculating a heat transfer temperature difference $\Delta t_m$ by the heat balance equation:

$$\Delta t_m = \frac{\Delta t_{\max} - \Delta t_{\min}}{\ln \dfrac{\Delta t_{\max}}{\Delta t_{\min}}} \,,$$

wherein $\Delta t_{\max}$, $\Delta t_{\min}$ are maximum and minimum temperature differences on both sides of the calculation section respectively;

afterwards, calculating the heat transfer coefficient K by a heat transfer equation of $P_t = AK\Delta t_m$, wherein A is a heat transfer area, K is a heat transfer coefficient, $\Delta t_m$ is the heat transfer temperature difference; and $P_t$ is the heat power delivered by the nuclear reactor coolant, in kW;

finally, acquiring a fouling thermal resistance $R_F$ by substituting the heat transfer coefficient K into the following equation for the heat transfer coefficient K based on the heat transfer principle of a cylindrical wall:

$$K = \frac{1}{\dfrac{1}{h_1} \cdot \dfrac{d_{ca}}{d_i} + \dfrac{1}{h_2} \cdot \dfrac{d_{ca}}{d_o} + R_W + R_F} \,,$$

wherein $h_1$, $h_2$ are convective heat transfer coefficients of the primary and secondary sides respectively, in $W/(m^2 \cdot K)$; $d_i$, $d_o$, $d_{ca}$ are the inner diameter, outer diameter and calculated diameter of the heat transfer tube, respectively, in m; $R_W$ is the thermal resistance of the heat transfer tube wall, in $m^2 \cdot K/W$; $R_F$ is the fouling thermal resistance, in $m^2 \cdot K/W$; and the outer diameter of the heat transfer tube is selected as the calculated diameter for the heat transfer coefficient.

Furthermore, the thermal performance calculation further includes circulation ratio calculation, and the input data for the circulation ratio calculation includes structural parameters, primary side flow rate, primary side inlet temperature (or outlet temperature, average temperature), primary side pressure, steam pressure, heat load, and feedwater temperature of the steam generator, and the output data for the circulation ratio calculation is the circulation ratio.

Furthermore, specific steps for the circulation ratio calculation are as follows: firstly, assuming one ratio as the circulation ratio and calculating a driving pressure head and a total flow pressure drop; secondly, comparing the driving pressure head and the total flow pressure drop, and re-assuming the circulation ratio if the two are different as a comparison result; thirdly, repeating the above two steps for iterating repeatedly, until the driving pressure head is equal to the total flow pressure drop, that is, the water circulation of the secondary side reaches a stable condition, so as to acquire the corresponding circulation ratio at this time.

Furthermore, specific reasons for determining the possible potential fault include but are not limited to: that the steam pressure measured at the secondary side outlet is lower than a calculated value of the steam pressure at the secondary side outlet, or the steam temperature measured at the secondary side outlet is higher than a calculated value of the steam temperature at the secondary side outlet.

Furthermore, the intelligent monitoring method further includes: performing flow field distribution calculation on the secondary side data output after the thermal performance calculation; and calculating the secondary side flow field of the tube bundle area of the steam generator, and outputting the flow field data after calculation.

Furthermore, the flow field distribution calculation further includes the following steps: performing data visualization on the acquired distribution results of the secondary side flow field and the temperature field; acquiring by calculation the inter-tube flow velocity, secondary side density, and void fraction on heat transfer tube nodes through a three-dimensional space interpolation algorithm; and calculating the flow field distribution in the steam generator based on a load calculation formula for the heat transfer tube flow-induced vibration, as well as the inter-tube flow velocity, secondary side density, and void fraction acquired by the three-dimensional space interpolation algorithm.

Furthermore, the intelligent monitoring method further includes: performing the flow-induced vibration analysis of the heat transfer tube on the secondary side data output after the thermal performance calculation and the output flow field data acquired after the flow field calculation to acquire by calculation the result of the flow-induced vibration analysis, wherein the result of the flow-induced vibration analysis includes but is not limited to effective flow velocities, critical flow velocities, damping ratios, and fluid-elasticity stability ratios (a ratio of effective flow velocity to critical flow velocity) of the straight tube-section and the bent tube-section of the heat transfer tube.

Furthermore, the intelligent monitoring method further includes: performing the prediction analysis with the wear prediction algorithm on a subsequent wear condition of the heat transfer tube, and providing the recommended method for tube blockage.

Furthermore, the wear prediction algorithm includes the following steps: firstly, entering data of wear depth, wear length, and wear morphology of each heat transfer tube with wear into a wear database based on detection data of each overhaul to form a data table; secondly, calculating a relationship between the wear depth and a wear volume at each type of wear point with a geometric method based on differences in the wear depth, the wear length, and the wear morphology, and converting the wear depth into a wear volume loss; thirdly, calculating a volume loss rate based on an amount and time of the wear volume loss that has occurred while assuming that a wear volume growth rate of one wear point per unit time is constant; fourthly, performing calculation as follows: volume loss at end of next cycle = existing volume loss + volume loss rate * time + volume loss measurement uncertainty, wherein the volume loss measurement uncertainty depends on the calibration test of the vortex detection of the heat transfer tube; fifthly, calculating the wear depth of each heat transfer tube at the end of the next cycle based on the geometric relationship between the wear depth and the wear volume acquired in step 2 and the volume loss at the end of the next cycle acquired in step 4; and sixthly, providing the recommended method for tube blockage based on the principle for tube blockage used in nuclear power plants.

Furthermore, the intelligent monitoring method further includes: determining the position of the loose component in the steam generator according to imported loose component signals of respective positions in the steam generator.

Furthermore, the method for determining the position of the loose component in the steam generator includes the following steps:

step 1: calculating the short-time root mean square value (RMS) of recorded alarm event data, and comparing the acquired RMS with a threshold to determine whether to alarm, specifically, if the RMS is greater than or equal to the threshold, no alarm is issued; and if the RMS is less than the energy threshold, the process proceeds to step (2);

step 2: calculating the amplitude probability density function $\rho$ of the recorded alarm event data, performing a correlation analysis on the $\rho$ and the probability density function $\rho_s$ of a standard signal, and comparing the p with the threshold $\rho_s$, if p < $\rho_s$, it is considered that the signal is not a collision signal and an alarm is not triggered; and if p $\geq$ $\rho_s$, an alarm is issued;

step 3: scanning, for the alarm signal, a spherical shell to achieve positioning according to a wave velocity calculation formula on the spherical shell; and

step 4: performing Fourier spectrum analysis on the alarm signal, and estimating the mass of the loose component with the spectrum of the collision signal using the characteristics that collision signals of loose components with different masses correspond to different Fourier spectra.

Furthermore, the intelligent monitoring method further includes:
consulting data files, which include but are not limited to relevant data of the steam generator in design, manufacturing and operation stages.

The present application further provides an intelligent monitoring system for a steam generator of a nuclear power plant, including:

several sensors, configured to acquire data of measure points in the steam generator;
a device thermal performance detection module, configured to perform thermal performance calculation on the data acquired from each sensor measure point and output secondary side data after calculation, and is capable of comparing the secondary side data output after calculation with a measured value of steam at a secondary side outlet to determine whether a potential fault exists in an operation process of the steam generator;

a device flow field digital twin module, configured to perform flow field distribution calculation on the secondary side data output after the thermal performance calculation, calculate a secondary side flow field of a tube bundle area of the steam generator, and output flow field data after calculation;

a heat transfer tube flow-induced vibration monitoring module, configured to perform a flow-induced vibration analysis of a heat transfer tube on the secondary side data output after the thermal performance calculation and the output flow field data acquired after the flow field calculation to acquire by calculation a result of the flow-induced vibration analysis, wherein the result of the flow-induced vibration analysis includes but is not limited to effective flow velocities, critical flow velocities, damping ratios, and fluid-elasticity stability ratios (a ratio of effective flow velocity to critical flow velocity) of a straight tube-section and a bent tube-section of the heat transfer tube; and

a heat transfer tube wear monitoring module, configured to perform a prediction analysis with a wear prediction algorithm on a subsequent wear condition of the heat transfer tube, and provide a recommended method for tube blockage,

all data being allowed to be visualized.

Furthermore, the data of each sensor measure point includes but is not limited to thermal power, as well as temperature, pressure, and flow rate of a primary circuit, and water level, feedwater temperature, outlet steam pressure, flow rate, and blowdown flow rate of the secondary side. Furthermore, the secondary side data output by the device thermal performance detection module includes secondary side steam space pressure, secondary side inlet flow rate and temperature, and secondary side heat exchange amount distribution data, and more specifically, the output data includes but is not limited to outlet steam pressure, flow rate, fouling coefficient, circulation ratio, the secondary side heat exchange amount, as well as pressures, flow rates and temperatures of a primary side and the secondary side.

Furthermore, input data of the flow field distribution calculation includes inlet and outlet parameters of the steam generator, as well as secondary side steam pressure, secondary side inlet flow rate and temperature, secondary side heat exchange amount distribution data, circulation ratio, steam space pressure, and descending channel inlet temperature acquired by the thermal performance calculation; and the output data of the flow field distribution calculation includes but is not limited to distribution results of the secondary side flow field and a temperature field.

Furthermore, the flow field distribution calculation includes following specific steps:

firstly, calculating flow field data of the steam generator under different input data in advance as sample data;

secondly, performing flow mode decomposition based on the sample data to acquire by calculation a finite-order orthogonal basis as a flow mode;

thirdly, acquiring by calculation a new orthogonal basis by Kelkien interpolation or inverse distance interpolation according to the secondary side data output after the thermal performance calculation; and

fourthly, recombining the flow modes to acquire by calculation the distribution results of the secondary side flow field and the temperature field.

Furthermore, the flow-induced vibration analysis specifically includes following steps:

firstly, establishing a heat transfer tube analysis model according to a result of the flow field data;

secondly, performing a modal analysis based on a built-in solver;

thirdly, performing calculation of the fluid-elasticity stability ratio to acquire a calculation result of the fluid-elasticity stability ratio, including but not limited to the effective flow velocity, the critical flow velocity, the damping ratio, and the fluid-elasticity stability ratio;

fourthly, calculating turbulence excitation to acquire a calculation result of the turbulence excitation, including but not limited to displacement and stress; and

fifthly, calculating vortex shedding to acquire a calculation result of vortex shedding amount, including but not limited to displacement and stress.

Furthermore, the intelligent monitoring system further includes:

a device loose-component monitoring module, configured to determine a position of a loose component in the steam generator according to imported loose component signals of respective positions in the steam generator.

Furthermore, the intelligent monitoring system further includes:

a device fatigue damage monitoring module, whose required fatigue accumulation factors of respective components are imported by a fatigue monitoring system installed in the nuclear power plant; and

a data and file management module, which is a data storage module of the intelligent monitoring system and is configured to record relevant data of the steam generator in design, manufacturing and operation stages.

In the intelligent monitoring system for a steam generator of a nuclear power plant according to the present application, the device thermal performance detection module is capable of performing the heat exchange fouling coefficient calculation of the primary and secondary sides of the heat transfer tube, and input data for the fouling coefficient calculation includes structural parameters, primary side flow rate, primary side inlet temperature (or outlet temperature, average temperature), primary side pressure, steam pressure, heat load, and feedwater temperature of the steam generator, and the output data for the fouling coefficient calculation is the heat exchange fouling coefficient of the primary and secondary sides of the heat transfer tube.

Furthermore, the specific steps of the fouling coefficient calculation are as follows:

firstly, calculating the thermal power delivered by a nuclear reactor coolant through a heat transfer equation of $P_t = q_{m,p}(h_{in} - h_{out})$, wherein $P_t$ is the thermal power delivered by the nuclear reactor coolant, in kW; $q_{m,p}$ is the mass flow rate of the coolant in the primary circuit, in kg/s; and $h_{in}$, $h_{out}$ are the specific enthalpy of the nuclear reactor coolant when entering and leaving the steam generator, respectively, in kJ/kg;

secondly, calculating the thermal resistance of tube wall by the following equation:

$$R_W = \frac{d_{ca}}{2\lambda_w} \ln \frac{d_o}{d_i} ,$$

wherein $\lambda_w$ is the thermal conductivity of the material of the heat transfer tube, in $W/(m \cdot K)$; and $d_i$, $d_o$, $d_{ca}$ are the inner diameter, outer diameter and calculated diameter of the heat transfer tube, respectively, in m;

next, calculating a heat transfer temperature difference $\Delta t_m$ by the heat balance equation:

$$\Delta t_m = \frac{\Delta t_{max} - \Delta t_{min}}{\ln \dfrac{\Delta t_{max}}{\Delta t_{min}}} ,$$

wherein $\Delta t_{max}$, $\Delta t_{min}$ are maximum and minimum temperature differences on both sides of the calculation section respectively;

afterwards, calculating the heat transfer coefficient K by a heat transfer equation of $P_t = AK\Delta t_m$, wherein A is a heat transfer area, K is a heat transfer coefficient, $\Delta t_m$ is the heat transfer temperature difference; and $P_t$ is the heat power delivered by the nuclear reactor coolant, in kW;

finally, acquiring a fouling thermal resistance $R_F$ by substituting the heat transfer coefficient K in the following step into the following equation for the heat transfer coefficient K based on the heat transfer principle of a cylindrical wall:

$$K = \frac{1}{\dfrac{1}{h_1} \cdot \dfrac{d_{ca}}{d_i} + \dfrac{1}{h_2} \cdot \dfrac{d_{ca}}{d_o} + R_W + R_F} ,$$

wherein $h_1$, $h_2$ are convective heat transfer coefficients of the primary and secondary sides respectively, in $W/(m^2 \cdot K)$; $d_i$, $d$, , $d_{ca}$ are the inner diameter, outer diameter and calculated diameter of the heat transfer tube, respectively, in m; $R_W$ is the thermal resistance of the heat transfer tube wall, in $m^2 \cdot K/W$; $R_F$ is the fouling thermal resistance, in $m^2 \cdot K/W$; and the outer diameter of the heat transfer tube is selected as the calculated diameter for the heat transfer coefficient.

Furthermore, the device thermal performance detection module is capable of performing circulation ratio calculation, and the input data for the circulation ratio calculation includes structural parameters, primary side flow rate, primary side inlet temperature (or outlet temperature, average temperature), primary side pressure, steam pressure, heat load, and feedwater temperature of the steam generator, and the output data for the circulation ratio calculation is the circulation ratio.

Furthermore, specific steps for the circulation ratio calculation are as follows:

firstly, assuming one ratio as the circulation ratio and calculating a driving pressure head and a total flow pressure drop;

secondly, comparing the driving pressure head and the total flow pressure drop, and re-assuming the circulation ratio if the two are different as a comparation result;

thirdly, repeating the above two steps for iterating repeatedly, until the driving pressure head is equal to the total flow pressure drop, that is, the water circulation of the secondary side reaches a stable condition, so as to acquire the corresponding circulation ratio at this time.

Furthermore, specific reasons for determining the possible potential fault include but are not limited to: that the steam pressure measured at the secondary side outlet is lower than a calculated value of the steam pressure at the secondary side outlet, or the steam temperature measured at the secondary side outlet is higher than a calculated value of the steam temperature at the secondary side outlet.

Furthermore, the intelligent monitoring system further includes: a device flow field digital twin module, configured to perform flow field distribution calculation on the secondary side data output after the thermal performance calculation, calculating the secondary side flow field of the tube bundle area of the steam generator, and outputting the flow field data after calculation.

Furthermore, the flow field distribution calculation includes following specific steps:

firstly, calculating flow field data of the steam generator under different input data in advance as sample data;

secondly, performing flow mode decomposition based on the sample data to acquire by calculation a finite-order orthogonal basis as a flow mode;

thirdly, acquiring by calculation a new orthogonal basis by Kelkien interpolation or inverse distance interpolation according to the secondary side data output after the thermal performance calculation; and

fourthly, recombining the flow modes to acquire by calculation the distribution results of the secondary side flow field and the temperature field.

Furthermore, the flow field distribution calculation further includes the following steps: performing data visualization on the acquired distribution results of the secondary side flow field and the temperature field;

acquiring by calculation the inter-tube flow velocity, secondary side density, and void fraction on heat transfer tube nodes through a three-dimensional space interpolation algorithm; and

calculating the flow field distribution in the steam generator based on a load calculation formula for the heat transfer tube flow-induced vibration, as well as the inter-tube flow velocity, secondary side density, and void fraction acquired by the three-dimensional space interpolation algorithm.

Furthermore, the intelligent monitoring system further includes:

a heat transfer tube flow-induced vibration monitoring module, configured to perform the flow-induced vibration analysis of the heat transfer tube on the secondary side data output after the thermal performance calculation and the output flow field data acquired after the flow field calculation to acquire by calculation the result of the flow-induced vibration analysis,

wherein the result of the flow-induced vibration analysis includes but is not limited to effective flow velocities, critical flow velocities, damping ratios, and fluid-elasticity stability ratios (a ratio of effective flow velocity to critical flow velocity) of the straight tube-section and the bent tube-section of the heat transfer tube.

Furthermore, the intelligent monitoring system further includes: a heat transfer tube wear monitoring module, configured to perform the prediction analysis with the wear prediction algorithm on a subsequent wear condition of the heat transfer tube, and providing the recommended method for tube blockage.

Furthermore, the wear prediction algorithm includes the following steps: firstly, entering data of wear depth, wear length, and wear morphology of each heat transfer tube with wear into a wear database based on detection data of each overhaul to form a data table; secondly, calculating a relationship between the wear depth and a wear volume at each type of wear point with a geometric method based on differences in the wear depth, the wear length, and the wear morphology, and converting the wear depth into a wear volume loss; thirdly, calculating a volume loss rate based on an amount and time of the wear volume loss that have occurred while assuming that a wear volume growth rate of one wear point per unit time is constant; fourthly, performing calculation as follows: volume loss at end of next cycle = existing volume loss + volume loss rate * time + volume loss measurement uncertainty, wherein the volume loss measurement uncertainty depends on the calibration test of the vortex detection of the heat transfer tube; fifthly, calculating the wear depth of each heat transfer tube at the end of the next cycle based on the geometric relationship between the wear depth and the wear volume acquired in step 2 through the volume loss at the end of the next cycle acquired in step 4; and sixthly, providing the recommended method for tube blockage based on the principle for tube blockage used in nuclear power plants.

Furthermore, the method for determining the position of the loose component in the steam generator includes the following steps:

step 1: calculating the short-time root mean square value (RMS) of recorded alarm event data, and comparing the acquired RMS with a threshold to determine whether to alarm, specifically, if the RMS is greater than or equal to the threshold, no alarm is issued; and if the RMS is less than the threshold, the process proceeds to step (2);

step 2: calculating the amplitude probability density function $\rho$ of the recorded alarm event data, performing correlation analysis on the $\rho$ and the probability density function $\rho_s$ of a standard signal, and comparing the $\rho$ with the threshold $\rho_s$, if $p < \rho_s$, it is considered that the signal is not a collision signal and an alarm is not triggered; and if $p \geq \rho_s$, an alarm is issued;

step 3: scanning, for the alarm signal, a spherical shell to achieve positioning according to a wave velocity calculation formula on the spherical shell; and

step 4: performing Fourier spectrum analysis on the alarm signal, and estimating the mass of the loose component with the spectrum of the collision signal using the characteristics that collision signals of loose components with different masses correspond to different Fourier spectra.

The present invention further provides a computer device, including a memory and a processor, wherein the memory stores a computer program, and the processor implements the steps of any one of the above methods when executing the computer program.

The present invention further provides a computer-readable storage medium having a computer program stored thereon, wherein the computer program implements the steps of any one of the above methods when executed by a processor.

Compared with the prior art, the present invention has the following beneficial effects:

As integrated intelligent monitoring method and system for a steam generator that can be used for thermal performance monitoring, local flow field monitoring, heat transfer tube flow-induced vibration and wear evaluation, and fatigue and loose component monitoring and diagnosis, the present invention can be used for the full life cycle management of the steam generator. During the installation of the system, no new sensor is added, and the installation is more convenient. At the same time, the system can monitor a fouling coefficient, a flow field distribution condition and other data that cannot be monitored previously, and predict the wear condition of the heat transfer tube, so that the time required for maintenance of the steam generator is greatly shortened, and the economic benefit of the nuclear power plant is improved.

**BRIEF DESCRIPTION OF THE DRAWINGS**

The accompanying drawings of the specification, which constitute a part of the present invention, are used to provide a further understanding of the present invention. The schematic embodiments of the present invention and descriptions thereof are used to explain the present invention and do not constitute improper limitations on the present invention.

FIG. 1 is a schematic diagram of data sources of various modules and logic relationships among modules in the intelligent monitoring system for a steam generator according to the present invention.

FIG. 2 is a schematic diagram of data sources in a device thermal performance monitoring module in the intelligent monitoring system for the steam generator and the calculation logic of this module according to the present invention.

FIG. 3 is a schematic diagram of data sources in a device flow field digital twin module in the intelligent monitoring system for the steam generator and the calculation logic of this module according to the present invention.

FIG. 4 is an overview of the overall operation situation of devices in the intelligent monitoring system for the steam generator according to the present invention.

FIG. 5 shows the device thermal performance monitoring module in the intelligent monitoring system for the steam generator according to the present invention.

FIG. 6 shows the device flow field digital twin module in the intelligent monitoring system for the steam generator according to the present invention.

FIG. 7 shows the heat transfer tube flow-induced vibration monitoring module in the intelligent monitoring system for the steam generator according to the present invention.

FIG. 8 shows the heat transfer tube wear monitoring module in the intelligent monitoring system for the steam generator according to the present invention.

FIG. 9 shows the device fatigue damage monitoring module in the intelligent monitoring system for the steam generator according to the present invention.

FIG. 10 shows the device loose component monitoring module in the intelligent monitoring system for the steam generator according to the present invention.

FIG. 11 shows the data and file management module in the intelligent monitoring system for the steam generator according to the present invention.

FIG. 12 is a diagram of the thermal calculation process in the device thermal performance monitoring module.

FIG. 13 is a logic diagram for analyzing and comparing the thermal operation states in the device thermal performance monitoring module.

FIG. 14 is a calculation flow chart of the heat transfer tube flow-induced vibration monitoring module.

FIG. 15 is a calculation flow chart of the wear prediction algorithm in the heat transfer tube wear monitoring module.

FIG. 16 is a schematic diagram of the calculation logic in the device loose component monitoring module.

The accompanying drawings, which are incorporated in and constitute a part of Description, illustrate embodiments consistent with the present application and together with Description serve to explain the principles of the present application.

**DETAILED DESCRIPTION**

In order to better understand technical solutions of the present application, the embodiments of the present application will be described in detail below in conjunction with the accompanying drawings.

Embodiment 1

In an embodiment of the present invention, an intelligent monitoring method for a steam generator of a nuclear power plant is provided, and the method includes follows steps.

Firstly, existing several sensor measure points in an existing steam generator in a nuclear power plant are determined to acquire data of each sensor measure point. In this step, there is no need to install new sensors, and the existing measure points are used to collect data. The data collected by respective measure points include: the required thermal power; temperature, pressure, and flow rate of the primary circuit; and water level, feedwater temperature, outlet steam pressure, flow rate and blowdown flow rate of the secondary side. The above data are all acquired from the existing reactor coolant system (RCS), steam generator system (SGS) and steam generator blowdown system (BDS), and there is no need to add new measure points to acquire additional data.

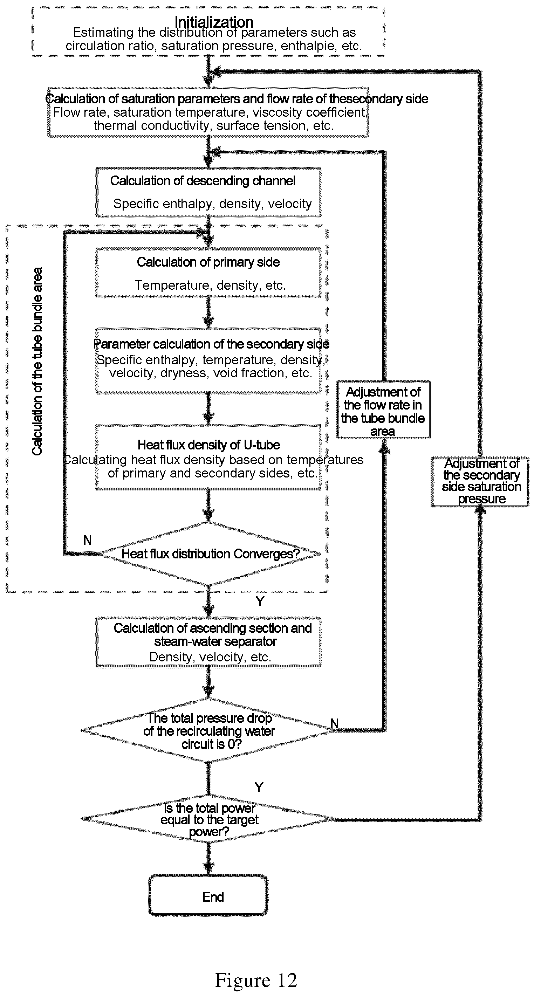

Secondly, all the data acquired from respective sensor measure points are used for thermal performance calculation, and secondary side data is output after analysis. In this step, the thermal model debugging algorithm and the thermal performance monitoring algorithm are used to calculate parameters, such as the heat transfer tube fouling coefficient and circulation ratio, of the steam generator. The thermal performance calculation process is shown in FIG. 12.

Firstly, the heat transfer equation can be acquired as follows:

$$P_t = q_{m,p}(h_{in} - h_{out}) \qquad (1)$$

In formula (1), $P_t$ is the thermal power delivered by the nuclear reactor coolant, in kW; $q_{m,p}$ is the mass flow rate of the coolant in the primary circuit, in kg/s; and $h_{in}$, $h_{out}$ are the specific enthalpy of the nuclear reactor coolant when entering and leaving the steam generator, respectively, in kJ/kg.

The heat transfer equation for the primary and secondary sides is as follows:

$$P_t = AK\Delta t_m \qquad (2)$$

In formula (2), A is a heat transfer area, K is a heat transfer coefficient, and $\Delta t_m$ is the heat transfer temperature difference.

The following formula can be acquired based on the heat transfer principle of a cylindrical wall:

$$K = \cfrac{1}{\cfrac{1}{h_1} \cdot \cfrac{d_{ca}}{d_i} + \cfrac{1}{h_2} \cdot \cfrac{d_{ca}}{d_o} + R_W + R_F} \qquad (3)$$

In formula (3), $h_1$, $h_2$ are convective heat transfer coefficients of the primary and secondary sides respectively, in $W/(m^2 \cdot K)$; $d_i$, $d_o$, $d_{ca}$ are the inner diameter, outer diameter and calculated diameter of the heat transfer tube, respectively, in m; $R_W$ is the thermal resistance of the heat transfer tube wall, in $m^2 \cdot K/W$; $R_F$ is the fouling thermal resistance, in $m^2 \cdot$

*K/W.* A selected calculated diameter should be indicated for the heat transfer coefficient K, and usually the outer diameter of the heat transfer tube is used as the calculated diameter. The convective heat transfer coefficient $h_1$ of the primary side is calculated using the Dittus-Boelter formula, and the convective heat transfer coefficient $h_2$ of the secondary side is calculated using the Jens-Lottes formula.

The heat conduction thermal resistance of the tube wall is given by the following formula:

$$R_W = \frac{d_{ca}}{2\lambda_w} \ln \frac{d_o}{d_i} \qquad (4)$$

In formula (4), $\lambda_w$ is the thermal conductivity of the material of the heat transfer tube, in $W/(m \cdot K)$.

When the working medium works in a co-current or counter-current manner, under the condition that the flow rates and specific heat of the working media on both sides of the heat transfer tube, and the heat transfer coefficient K along the heat transfer surface remain unchanged, the heat transfer temperature difference can be derived from the heat transfer equation and the heat balance equation:

$$\Delta t_m = \frac{\Delta t_{\max} - \Delta t_{\min}}{\ln \dfrac{\Delta t_{\max}}{\Delta t_{\min}}} \qquad (5)$$

In formula (5), $\Delta t_{\max}$, $\Delta t_{\min}$ are maximum and minimum temperature differences on both sides of the calculation section respectively.

By inputting structural parameters of the steam generator, primary side inlet temperature (or outlet temperature, average temperature), pressure and flow rate, steam outlet pressure, heat load and feedwater temperature, the heat exchange fouling coefficient of the primary and secondary sides of the steam generator is calculated according to the above formulas (1) - (5).

By inputting structural parameters of the steam generator, primary side inlet temperature (or outlet temperature, average temperature), pressure and flow rate, heat load and feedwater temperature, the circulation ratio can be iteratively calculated according to the water circulation stability condition of the secondary side, that is, the driving pressure head is equal to the total flow pressure drop. First, a circulation ratio is assumed to acquire the driving pressure head and the total flow pressure drop, if the two are different, a circulation ratio is re-assumed to iterate repeatedly until the driving pressure head is equal to the total flow pressure drop, and the corresponding circulation ratio is the desired value.

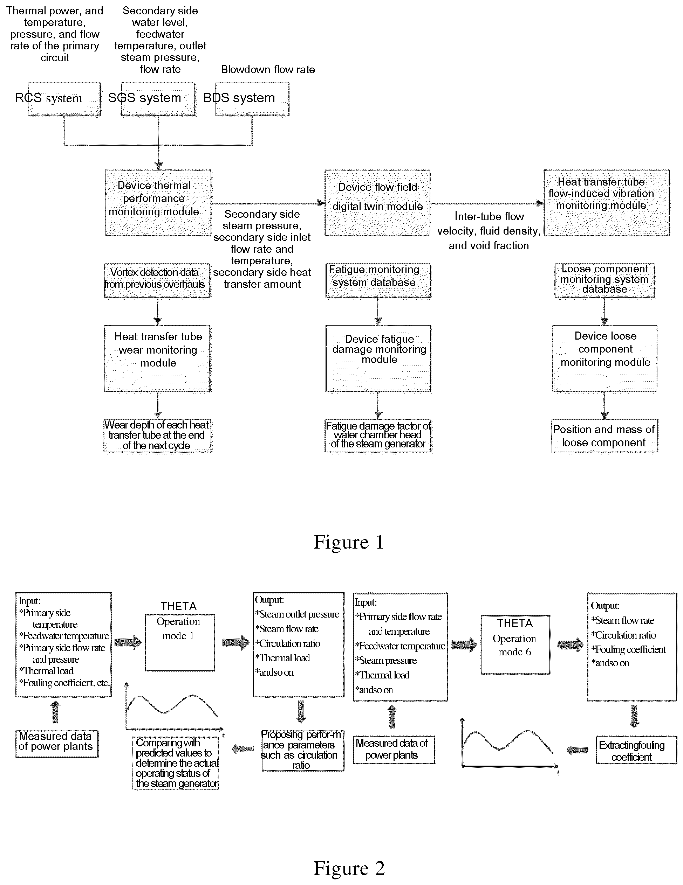

FIG. 2 is a schematic diagram of data sources in a device thermal performance monitoring module and the calculation logic of this module. As shown in FIG. 2, the temperature, pressure, flow rate and other parameters are called based on the real-time monitoring data of the nuclear power plant to form a complete input file of the device thermal performance monitoring module. The device thermal performance monitoring module generates a complete output file through calculation. The output file contains the outlet steam pressure, flow rate, fouling coefficient, circulation ratio, secondary side heat exchange amount, as well as pressures, flow rates and temperatures of the primary side and the secondary side.

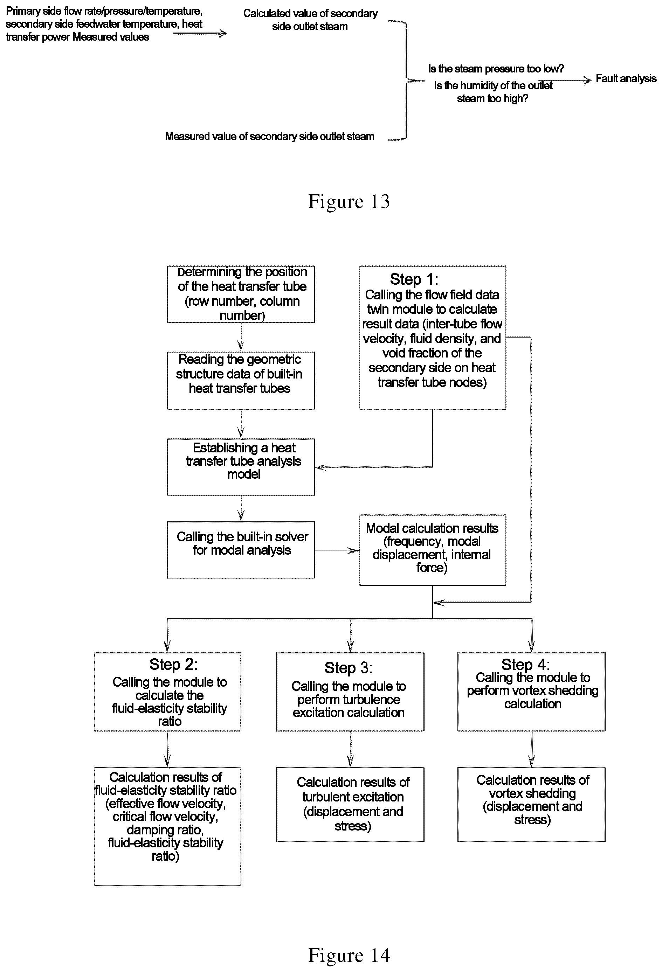

The outlet steam pressure, circulation ratio, and fouling coefficient can be directly called and compared with the predicted values to determine the actual operating status of the steam generator. By comparing the thermal calculation value of the steam generator with the measured value, as shown in FIG. 13, potential problems that may exist in the operation of the steam generator can be found in time.

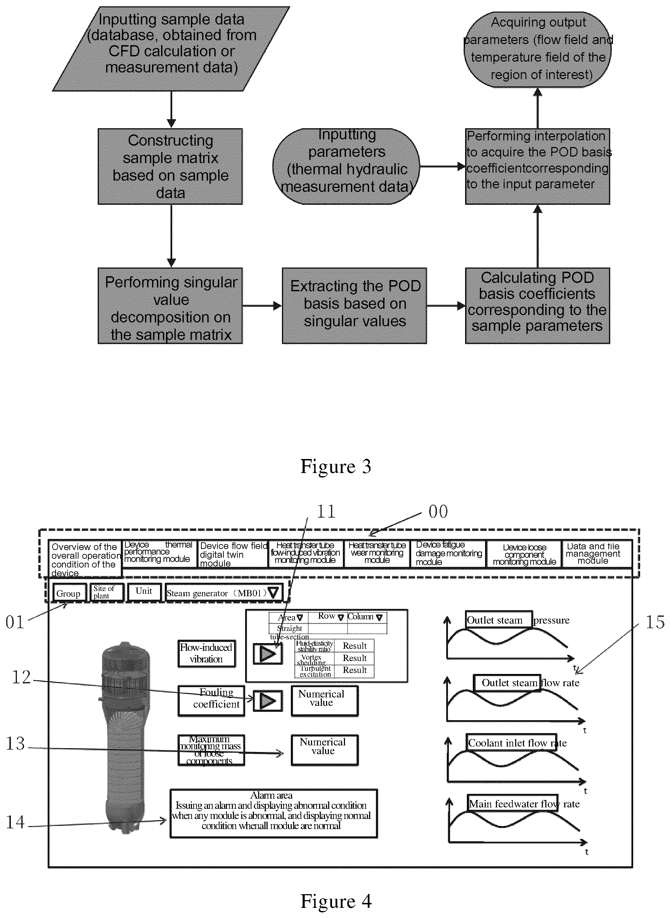

The secondary side data output after the thermal performance calculation and analysis includes secondary side steam pressure, secondary side inlet flow rate and temperature, and secondary side heat exchange amount distribution data, which are input into the device flow field digital twin module as necessary input for flow field calculation. Other parameters such as secondary side heat exchange amount parameter, as well as pressures, flow rates and temperatures of primary and secondary sides may also be used as calculation inputs for other modules. Furthermore, flow field distribution calculation is performed on the secondary side data to output flow field data, and the flow field order-reduction algorithm is used to calculate the secondary side flow field of the tube bundle area of the steam generator according to measured inlet and outlet parameters, as well as secondary side flow rate, descending channel inlet temperature, circulation ratio, steam space pressure acquired by the thermal performance calculation, and the calculation process is shown in FIG. 3.

Flow fields of the steam generator under different calculation inputs are calculated in advance by general commercial computational fluid dynamics software as basic data, i.e., sample data. Based on the sample data, flow mode decomposition is performed, and the calculation formula of matrix SVD decomposition (matrix singular value decomposition) is referred to. In this embodiment, the POD (proper orthogonal decomposition) method is used to acquire a finite-order orthogonal basis as the flow mode. Combined with the input parameters provided by the thermal performance monitoring module, new basis coefficients are acquired through Kellkin interpolation or inverse distance interpolation, and the modes are recombined to acquire the distribution results of the secondary side flow field and a temperature field. After acquiring the calculation results of the secondary side flow field and the temperature field, data visualization is performed according to the calculation results, the cloud map on the cross section is displayed, the inter-tube flow velocity, secondary side density, and void fraction on the heat transfer tube nodes are acquired through a three-dimensional space interpolation algorithm, and flow field distribution in the steam generator is quickly calculated and monitored according to the calculation formula for the heat transfer tube flow-induced vibration load and the inter-tube flow velocity, secondary side density, and void fraction acquired by interpolation.

Furthermore, the fluid-elasticity stability ratio calculation method, turbulence excitation calculation method and vortex shedding calculation method may be used to analyze the flow-induced vibration of the heat transfer tube to provide analysis results. Specific steps for the flow-induced vibration analysis are shown in the calculation flow chart of the heat transfer tube flow-induced vibration monitoring module in FIG. 14:

Step 1: the flow field digital twin module is called to calculate the result data, including the inter-tube flow velocity, fluid density and void fraction on the heat transfer tube nodes.

Step 2: the heat transfer tube flow-induced vibration monitoring module employs ASME B&PVC (American Society of Mechanical Engineering, Boiler and Pressure Vessel Code) and calculation formulas of the critical damping ratio, effective flow velocity and critical flow velocity (Connors formula) to acquire results of the frequency and modal displacement of the heat transfer tube through a method of modal analysis, so as to complete the calculation of the fluid-elasticity stability ratio and generate an output file, including the results of effective flow velocities, critical flow velocities, damping ratios and fluid-elasticity stability ratios (ratio of effective flow velocity to critical flow velocity) of the straight tube-section and bent tube-section of the heat transfer tube.

The following formula is acquired according to modal analysis theory:

$$[M]\{\ddot{x}\} + [K]\{x\} = 0 \qquad (6)$$

In formula (6), [M] is the mass matrix; [K] is the stiffness matrix; $\{\ddot{x}\}$ is the acceleration vector; and $\{x\}$ is the displacement vector.

It is assumed that the solution of the above formula is: $\{x\}=\{\phi\}e^{i\omega t}$, and by substituting the above solution into the formula (6), the following characteristic equation is acquired:

$$([K] - \omega^2[M])\{\phi\} = 0 \text{ or } \det([K] - \lambda[M]) = 0 \qquad (7)$$

In formula (7), $\lambda = \omega^2$; for a system with N degrees of freedom, there are N natural frequencies ($\omega_j$, j = 1, 2, ..., N); and the eigenvector corresponding to the natural frequency $\omega_j$ is the modal shape.

The effective cross flow rate $U_{e,n}$ and the critical cross flow rate $U_{c,n}$ in the $n^{th}$ order mode are calculated as follows:

$$U_{e,n} = \sqrt{\frac{\sum_{j=1}^{N} U_j^2 \phi_{jn}^2 \Delta z_j}{\sum_{j=1}^{N} \phi_{jn}^2 \Delta z_j}} \qquad (8)$$

$$U_{c,n} = C_2 f_n D \left(\frac{m_o \delta}{\rho_o D^2}\right)^a \qquad (9)$$

and the fluid-elasticity stability ratio $FSR_n$ is as follows:

$$FSR_n = U_{e,n} / U_{c,n} \qquad (10)$$

In formula (10), $D$ is the outer diameter of the heat transfer tube; $U_j$ is the cross flow rate at the node $j$; $\phi_{jn}$ is the modal displacement at the node $j$ at the $n^{th}$ order natural frequency; $\Delta z_j$ is half of the sum of lengths of two adjacent units to which the node $j$ belongs; N is the total number of nodes; $m_o$ is the reference mass per unit length of the structure; $\rho_o$ is the reference density of the secondary side fluid; $f_n$ is the $n^{th}$ order natural frequency; $\delta_n$ is the $n^{th}$ order logarithmic attenuation rate, $\delta_n = 2\pi\xi_n$, $\xi_n$ represents the damping ratio of the $n^{th}$ order mode; and $C_2$, $a$ are parameters determined by experiments.

Step 3: the heat transfer tube flow-induced vibration monitoring module employs the ASME B&PVC and the empirical formula for structural displacement amplitude under turbulent excitation to complete the displacement amplitude calculation of the heat transfer tube under turbulent excitation based on the results of frequency, modal displacement and internal force of the heat transfer tube acquired by modal analysis of the heat transfer tube, and further complete the stress calculation of the heat transfer tube according to the calculation formula for material mechanics stress to generate an output file including the results of displacement and stress of the heat transfer tube under turbulent excitation.

The structural displacement response under turbulent excitation is calculated as follows:

$$y_{kn} = \sqrt{\sum_{i=1}^{M} \frac{L_i \phi_{kn}^2 (D/2)^2 C_R^2 \sum_{0}^{L_i} \left(\rho_o U_j^2\right)^2 \phi_{jn}^2 \Delta z_j}{64\pi^3 f_n^3 \xi \left(\sum_{j=1}^{N} m_j \phi_{jn}^2 \Delta z_j\right)^2} \left(J_{nn}^i\right)^2} \qquad (11)$$

In formula (11), $y_{kn}$ is the displacement response at the node $k$ in the $n^{th}$ order mode caused by turbulence excitation; $M$ is the total number of spans; $L_i$ is the length of the $i^{th}$ span; $\phi_{kn}$ is the modal displacement at the node $k$ in the $n^{th}$ order natural frequency; $m_j$ is the actual mass per unit length of the structure at the node $j$; $C_R$ is the random excitation coefficient, which is determined according to the recommended value for the oncoming flow cylinder in the ASME code; and $\left(J_{nn}^i\right)^2$ is the self-synthesis acceptance of the $i^{th}$ span, $\left(J_{nn}^i\right)^2 \approx l_c^i / L_i$, $l_c^i$ is the relevant length of the $i^{th}$ span, which is approximately 1 to 2 times the diameter $D$ of the heat transfer tube.

The displacement response amplitude (RMS value) of the node $k$ of the structure under turbulent excitation is calculated as follows:

$$y_k = \sqrt{\sum_{n=1}^{N} y_{kn}^2} \qquad (12)$$

The stress of the heat transfer tube under turbulent excitation is calculated as follows:

$$\sigma_{kn} = \frac{y_{n\max}}{\phi_n^*} \left( \frac{F_{xkn}}{A_t} + \frac{M_{ykn} D}{2 I_y} \sin\theta - \frac{M_{zkn} D}{2 I_z} \cos\theta \right) \qquad (13)$$

In formula (13), $\sigma_{kn}$ is the heat transfer tube stress at the node k in the $n^{th}$ order mode under turbulent excitation; $y_{n\max}$ is the maximum value of the displacement response $y_{kn}$ of each node in the $n^{th}$ order mode caused by turbulent excitation; $\phi_n^*$ is the maximum normalized modal displacement in the $n^{th}$ order mode; $A_t$ is the cross-sectional area of the heat transfer tube; $F_{xkn}$ is the axial force of the heat transfer tube at the node $k$ in the $n^{th}$ order mode; $M_{ykn}$ is the bending moment of the cross section of the heat transfer tube in the Y direction at the node k in the $n^{th}$ order mode; $I_y$ is the moment of inertia of the cross section of the heat transfer tube in the Y direction; $\theta$ is the angle of the cross section of the heat transfer tube; $M_{zkn}$ is the bending moment of the cross section of the heat transfer tube in the Z direction at the node k in the $n^{th}$ order mode; and $I_z$ is the moment of inertia of the cross section of the heat transfer tube in the Z direction.

The stress amplitude (RMS value) of the node $k$ of the heat transfer tube caused by turbulent excitation is calculated as follows:

$$\sigma_k = \sqrt{\sum_{n=1}^{N} \sigma_{kn}^2} \qquad (14)$$

Step 4: the heat transfer tube flow-induced vibration monitoring module employs the ASME B&PVC and the structural displacement amplitude formula under vortex shedding excitation to complete the displacement amplitude calculation of the heat transfer tube under vortex shedding based on results of the frequency, modal displacement and internal force of the heat transfer tube acquired by the heat transfer tube modal analysis, and further complete the stress calculation of the heat transfer tube according to the material mechanics stress calculation formula to generate an output file including results of the displacement and stress of the heat transfer tube under vortex shedding excitation.

The vortex periodically and alternately separates from both sides of the heat transfer tube, forming an alternating lift on the tube, and its frequency can be expressed as:

$$f_s = S_t \frac{U_o}{D} \qquad (15)$$

In formula (15), $S_t$ is the Strouhal number; and $U_o$ is the reference velocity of the secondary side fluid.

When the structural frequency $f_n$ of the heat transfer tube falls within a range of $0.7f_s \leq f_n \leq 1.3f_s$, the vortex shedding frequency $f_s$ is locked at the natural frequency $f_n$. If $f_n$ is not within this range, the structural response caused by vortex shedding is very small. When the frequency is locked, the ASME B&PVC proposes three semi-empirical formulas for calculating the structural displacement amplitude:

$$y_n^* = \frac{1.29 D\gamma}{\left[1 + 0.43\left(2\pi S_t^2 C_n\right)\right]^{3.35}} \qquad (16)$$

$$y_n^* = \frac{0.07 D\gamma}{\left(C_n + 1.9\right)S_t^2} \sqrt{0.3 + \frac{0.72}{\left(C_n + 1.9\right)S_t}} \qquad (17)$$

$$y_n^* = \frac{0.32 D\gamma}{\sqrt{0.06 + \left(2\pi S_t^2 C_n\right)^2}} \qquad (18)$$

In the above formulas, $\gamma$ is the modal coefficient, which usually varies between 1.0 and 1.3; and $C_n$ is the reduced damping in the $n^{th}$ order mode, which is calculated as follows:

$$C_n = \frac{4\pi\xi \sum_{j=1}^{N} m_j \phi_{jn}^2 \Delta z_j}{\rho_o D^2 \sum_{L_b} \phi_{jn}^2 \Delta z_j} \qquad (19)$$

In formula (19), $L_b$ represents that the integration area runs within a length of one span from the bottom of the hot section and the cold section.

The stress of the heat transfer tube under vortex shedding excitation is calculated as follows:

$$\sigma_{kn}^* = \frac{y_n^*}{\phi_n^*} \left( \frac{F_{xkn}}{A_t} + \frac{M_{ykn}D}{2I_y}\sin\theta - \frac{M_{zkn}D}{2I_z}\cos\theta \right) \qquad (20)$$

In formula (20), $\sigma_{kn}^*$ is the heat transfer tube stress at the node k in the $n^{th}$ mode caused by vortex shedding.

The stress amplitude (RMS value) of the node $k$ of the heat transfer tube caused by vortex shedding excitation is calculated as follows:

$$\sigma_k^* = \sqrt{\sum_{n=1}^{N} \sigma_{kn}^{*2}}$$

(21)

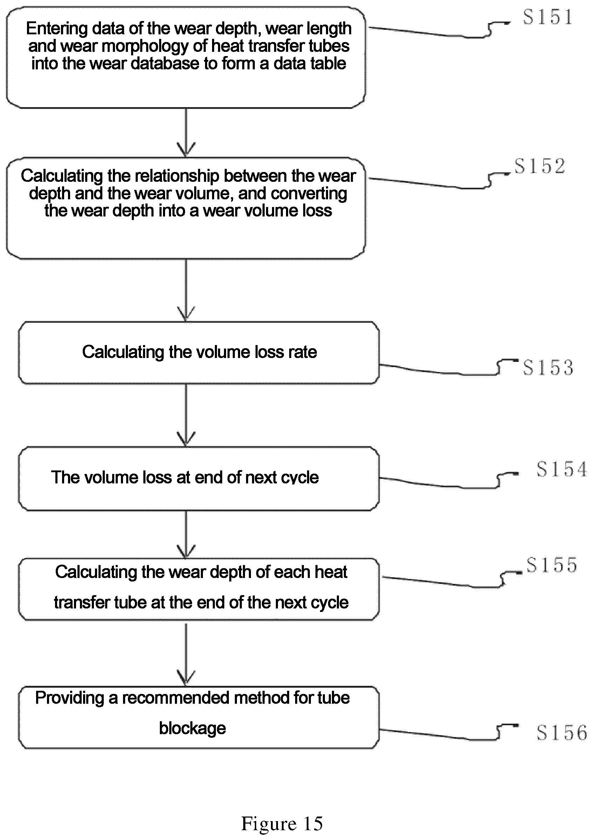

Furthermore, the subsequent wear condition of the heat transfer tube is predicted and analyzed, and a recommended method for tube blockage is provided. The specific analysis steps of the wear prediction algorithm are shown in FIG. 15:

(1) In step S151, based on the inspection data of each overhaul, data of the wear depth, wear length and wear morphology of each heat transfer tube with wear are entered into the wear database to form a data table.

(2) In step S152, based on the differences in the wear depth, the wear length and the wear morphology, a geometric method is used to calculate the relationship between the wear depth and the wear volume at each type of wear point, and the wear depth is converted into a wear volume loss.

(3) In step S153, assuming that the wear volume growth rate of one wear point per unit time is constant, the volume loss rate is calculated based on the amount and time of the wear volume loss that has occurred.

(4) In step S154, the following calculation is performed: volume loss at end of next cycle = existing volume loss + volume loss rate * time + volume loss measurement uncertainty. The uncertainty of volume measurement depends on the calibration test of the vortex detection of the heat transfer tube.

(5) In step S155, based on the geometric relationship between the wear depth and the wear volume acquired in step 2 and the volume loss at the end of the next cycle acquired in step 4, the wear depth of each heat transfer tube at the end of the next cycle is calculated.

(6) In step S156, a recommended method for tube blockage is provided based on the principle for tube blockage used in nuclear power plants. If the calculated wear depth at the end of the next cycle of the heat transfer tube is greater than the depth limit given in the principle for tube blockage, it is recommended to block the heat transfer tube. The principle for tube blockage may be the *In-Service Inspection Program* of the nuclear power plant itself, or the tube blockage limit of 40% in the ASME B&PVC Volume XI, or the maximum allowable wear depth calculated based on the ultimate explosive pressure, or other standards set by the nuclear power plant itself.

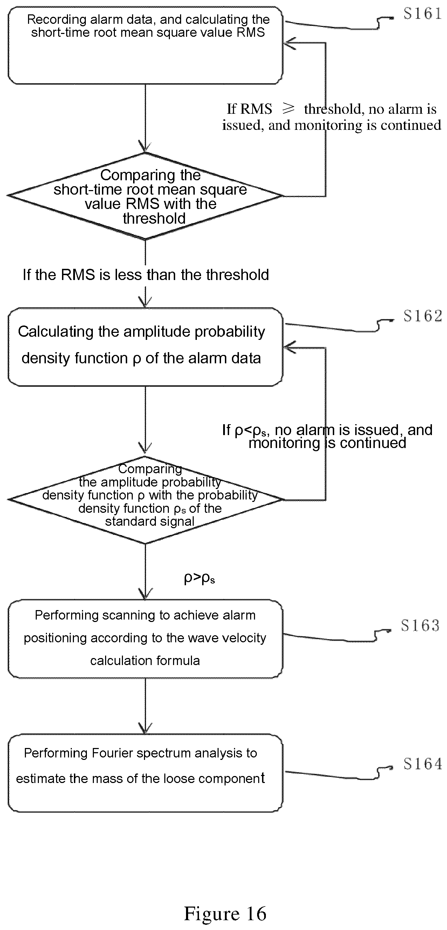

Furthermore, the required loose component signals of respective positions in the steam generator are imported by the loose component monitoring system installed in the nuclear power plant to determine the positions of the loose components in the steam generator. The specific analysis steps are shown in FIG16:

(1) In step S161, the short-time root mean square value (RMS) of the recorded alarm event data is calculated, and the calculated RMS is compared with the threshold to determine whether to alarm. If the RMS is greater than or equal to the threshold, no alarm is issued; and if the RMS is less than the energy threshold, the process proceeds to step (2).

(2) In step S162, the amplitude probability density function $\rho$ of the recorded alarm event data is calculated, a correlation analysis is performed on the $\rho$ and the probability density function $\rho_s$ of the standard signal, and $\rho$ is compared with the threshold $\rho_s$. If $p < \rho_s$, it is considered that the signal is not a collision signal and an alarm is not triggered; and if $p \geq \rho_s$, an alarm is issued.

(3) In step S163, for the alarm signal, scanning is performed on a spherical shell to achieve positioning according to the wave velocity calculation formula on the spherical shell.

(4) In step S164, Fourier spectrum analysis is performed on the alarm signal, and the mass of the loose component is estimated with the spectrum of the collision signal using the characteristics that collision signals of loose components with different masses correspond to different Fourier spectra.

Furthermore, by calling design drawings, design specifications, maintenance manuals in the design stage, the completion drawings, completion reports, maintenance manuals in the manufacturing stage, and the operating procedures, in-service inspection reports and so on in the operation stage, the relevant data of the steam generator in the design, manufacturing and operation stages are recorded, providing convenience for the operator to review the relevant content.

Embodiment 2

In an embodiment of the present invention, an intelligent monitoring system for a steam generator of a nuclear power plant is provided, as shown in FIGS. 4 to 11, the system including: several sensors, configured to acquire measure point data;

a device thermal performance monitoring module, configured to perform thermal performance calculation on the measure point data acquired by the several sensors, and output secondary side data after analysis;

a device flow field digital twin module, configured to perform flow field distribution calculation on the secondary side data, and then output flow field data;

a heat transfer tube flow-induced vibration monitoring module, configured to acquire heat transfer tube flow-induced vibration results by using the flow field data and calculation methods for fluid-elasticity stability ratio, vortex shedding, and turbulence excitation;

a heat transfer tube wear monitoring module, configured to analyze wear data of the heat transfer tube by using the wear prediction algorithm, and acquire a method for tube blockage;

a device fatigue damage monitoring module, connected with a fatigue monitoring system database;

a device loose component monitoring module, connected with a loose component monitoring system database; and

a data and file management module, which is a data storage module of the monitoring system and records relevant data of the steam generator in the design, manufacturing and operation stages,

all data in the above modules are visualized.

As shown in FIGS. 4 to 11, in the intelligent monitoring system for the steam generator, a button can be selected to enter the corresponding module.

As shown in FIG. 4, in the intelligent monitoring system for the steam generator, there are seven modules on the top, and button can be selected to enter the corresponding modules. The steam generator to be monitored can be selected for performing monitoring. The overall operation overview of the device is an overview of the monitoring data of the steam generator, and the real-time data in remaining modules can be displayed in a summary manner, the real-time data including but not limited to the real-time change curves of the outlet steam pressure, outlet steam flow rate, coolant flow rate, main feedwater flow rate, etc., and the real-time status of alarm items such as fatigue, loose components, and secondary side radioactive leakage, and the operator will be alarmed when abnormal data is monitored.

FIG. 4 shows an overview of the overall operation condition of the device in the intelligent monitoring system for the steam generator according to the present invention. As shown in FIG. 4, the buttons in the upper area (00) can be used to enter each module; the buttons in the area (01) can be used to switch the group/site/unit and select the steam generator to be monitored for performing monitoring; in the overview of the overall operation of the device, the flow-induced vibration calculation results are displayed by the button (11); the fouling coefficient calculation results are displayed by the button (12); the loose component mass estimation results are displayed in the area (13); the various data of the steam generator are observed in the alarm area (14) to see if they are abnormal; and the data curves such as outlet steam pressure, outlet steam flow rate, coolant inlet flow rate and main feedwater flow rate of the steam generator are observed in the area (15).

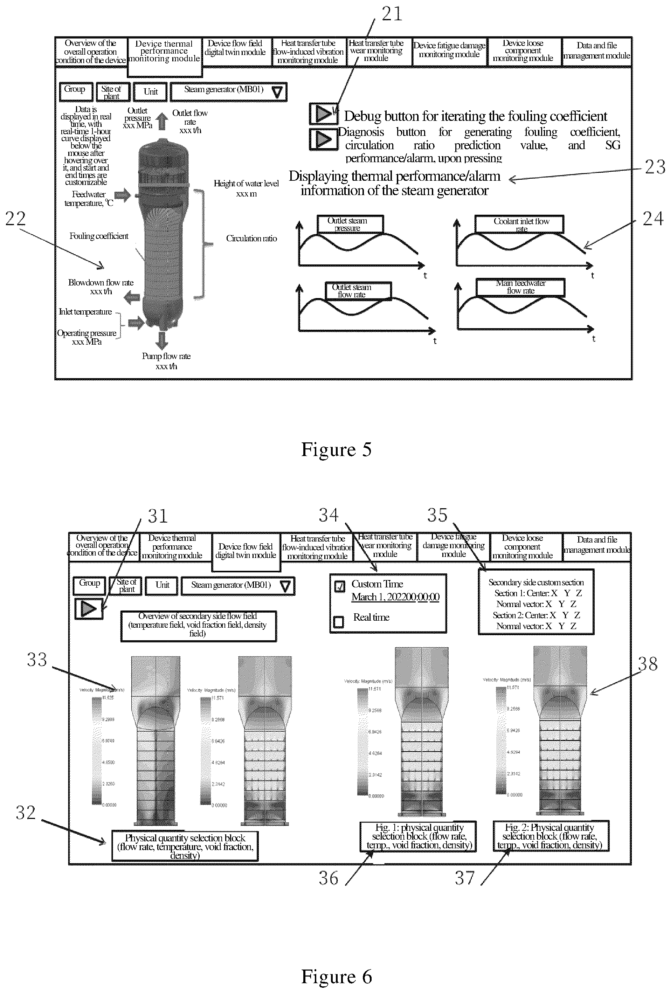

FIG. 5 shows the device thermal performance monitoring module in the intelligent monitoring system for the steam generator according to the present invention. As shown in FIG. 5, in the device thermal performance monitoring module, debugging is performed through the debugging button in the area (21) to implement iteration of the fouling coefficient; or the diagnosis button is used for controlling, and when pressing this button, functions such as generation of the fouling coefficient and the circulation ratio prediction value, and alarm of the steam generator are implemented; in the area (22), data such as the outlet pressure, flow rate, feedwater temperature, water level, blowdown flow rate, inlet temperature, operating pressure, pump flow rate, fouling coefficient and circulation ratio of the steam generator are displayed, the real-time curve of the data is displayed, a real-time curve of 1 hour is automatically displayed under the mouse, and the start and end time can be customized; the thermal performance or alarm information is displayed in the area (23); and data curves such as outlet steam pressure, coolant inlet flow, outlet steam flow rate, and main feedwater flow rate are displayed in the area (24).

The device thermal performance monitoring module performs the thermal performance calculation on all the data acquired from respective measure points, and outputs the secondary side data after analysis, wherein the device thermal performance monitoring module employs the thermal model debugging algorithm and the thermal performance monitoring algorithm to acquire by calculation parameters such as the heat transfer tube fouling coefficient and circulation ratio of the steam generator. The thermal performance calculation process is shown in the thermal calculation process diagram for the device thermal performance monitoring module shown in FIG. 12:

The heat transfer equation can be acquired:

$$P_t = q_{m,p}\left(h_{in} - h_{out}\right) \qquad (1)$$

In formula (1), $P_t$ is the thermal power delivered by the nuclear reactor coolant, in kW; $q_{m,p}$ is the mass flow rate of the coolant in the primary circuit, in kg/s; and $h_{in}$, $h_{out}$ are the specific enthalpy of the nuclear reactor coolant when entering and leaving the steam generator, respectively, in kJ/kg.

The heat transfer equation for the primary and secondary sides is:

$$P_t = AK\Delta t_m \qquad (2)$$

In formula (2), A is a heat transfer area, K is a heat transfer coefficient, and $\Delta t_m$ is the heat transfer temperature difference.

The following formula can be acquired based on the heat transfer principle of a cylindrical wall:

$$K = \cfrac{1}{\cfrac{1}{h_1} \cdot \cfrac{d_{ca}}{d_i} + \cfrac{1}{h_2} \cdot \cfrac{d_{ca}}{d_o} + R_W + R_F} \qquad (3)$$

In formula (3), $h_1$, $h_2$ are convective heat transfer coefficients of the primary and secondary sides respectively, in $W/(m^2 \cdot K)$; $d_i$, $d_o$, $d_{ca}$ are the inner diameter, outer diameter and calculated diameter of the heat transfer tube, in m; $R_W$ is the thermal resistance of the heat transfer tube wall, in $m^2 \cdot K/W$; $R_F$ is the fouling thermal resistance, in $m^2 \cdot K/W$. A selected calculated diameter should be indicated for the heat transfer coefficient K, and usually the outer diameter of the heat transfer tube is used as the calculated diameter. The convective heat transfer coefficient $h_1$ of the primary side is calculated using the Dittus-Boelter formula, and the convective heat transfer coefficient $h_2$ of the secondary side is calculated using the Jens-Lottes formula.

The heat conduction thermal resistance of the tube wall is given by the following formula:

$$R_W = \frac{d_{ca}}{2\lambda_w} \ln \frac{d_o}{d_i} \qquad (4)$$

In formula (4), $\lambda_w$ is the thermal conductivity of the material of the heat transfer tube, in $W/(m \cdot K)$.

When the working medium works in a co-current or counter-current manner, under the condition that the flow rates and specific heat of the working media on both sides of the heat transfer tube, and the heat transfer coefficient K along the heat transfer surface remain unchanged, the heat transfer temperature difference can be derived from the heat transfer equation and the heat balance equation:

$$\Delta t_m = \frac{\Delta t_{max} - \Delta t_{min}}{\ln \cfrac{\Delta t_{max}}{\Delta t_{min}}} \qquad (5)$$

In formula (5), $\Delta t_{max}$, $\Delta t_{min}$ are maximum and minimum temperature differences on both sides of the calculation section respectively.

By inputting structural parameters of the steam generator, primary side inlet temperature (or outlet temperature, average temperature), pressure and flow rate, steam outlet pressure, heat load and feedwater temperature, the heat exchange fouling coefficient of the primary and secondary sides of the steam generator is calculated according to the above formulas (1) - (5).

By inputting structural parameters of the steam generator, primary side inlet temperature (or outlet temperature, average temperature), pressure and flow rate, heat load and feedwater temperature, the circulation ratio can be iteratively calculated according to the water circulation stability condition of the secondary side, that is, the driving pressure head is equal to the total flow pressure drop. First, a circulation ratio is assumed to acquire the driving pressure head and the total flow pressure drop, if the two are different, a circulation ratio is re-assumed to iterate repeatedly until the driving pressure head is equal to the total flow pressure drop, and the corresponding circulation ratio is the desired value.

As shown in FIG. 2, the temperature, pressure, flow rate and other parameters are called based on the real-time monitoring data of the nuclear power plant to form a complete input file of the device thermal performance monitoring module. The device thermal performance monitoring module generates a complete output file through calculation. The output file contains the outlet steam pressure, flow rate, fouling coefficient, circulation ratio, secondary side heat exchange amount, as well as pressures, flow rates and temperatures of the primary side and the secondary side.

The outlet steam pressure, circulation ratio, and fouling coefficient can be directly called and compared with the predicted values to determine the actual operating status of the steam generator. By comparing the thermal calculation value of the steam generator with the measured value, as shown in the analysis and comparison logic diagram of thermal operation status in the device thermal performance monitoring module in FIG. 13, potential problems that may exist in the operation of the steam generator can be found in time.

The secondary side data output after the thermal performance calculation and analysis includes secondary side steam pressure, secondary side inlet flow rate and temperature, and secondary side heat exchange amount distribution data, which are input into the device flow field digital twin module as necessary input for flow field calculation. Other parameters such as secondary side heat exchange amount parameter, as well as pressures, flow rates and temperatures of primary and secondary sides may also be used as calculation inputs for other modules.

FIG. 6 shows the device flow field digital twin module in the intelligent monitoring system for the steam generator according to the present invention. As shown in FIG. 6, in the device flow field digital twin module, the flow field calculation is performed through the button (31); the physical quantity corresponding to the flow field, such as the dimension of flow rate, temperature, void fraction or density, is selected in the selection block (32); the area (33) displays the physical quantity cloud map corresponding to two mutually perpendicular longitudinal sections of the secondary side flow field (including but not limited to the temperature field, void fraction field, density field, etc.). After selecting the time in the selection block (34), the position in the selection block (35), and the physical quantities such as flow rate, temperature, void fraction, density, etc. in the selection boxes (36) and (37), any corresponding physical quantity cloud map can be generated in the area (38).

The device flow field digital twin module employs a flow field order-reduction algorithm to calculate the secondary side flow field of the tube bundle area of the steam generator according to measured inlet and outlet parameters, as well as secondary side flow rate, descending channel inlet temperature, circulation ratio, steam space pressure acquired by the thermal performance calculation, as shown in the data source in the device flow field digital twin module and the calculation logic of this module in the schematic diagram of FIG. 3.

In the device flow field digital twin module, flow fields of the steam generator under different calculation inputs are calculated in advance by general commercial computational fluid dynamics software as basic data, i.e., sample data, of the operation of the device flow field digital twin module. Based on the sample data, flow mode decomposition is performed, the calculation formula of matrix SVD decomposition (matrix singular value decomposition) is referred to, and the POD (proper orthogonal decomposition) method is used to acquire a finite-order orthogonal basis as the flow mode. Combined with the input parameters provided by the thermal performance monitoring module, new basis coefficients are acquired through Kellkin interpolation or inverse distance interpolation, and the modes are recombined to acquire the distribution results of the secondary side flow field and a temperature field. After acquiring the calculation results of the secondary side flow field and the temperature field, data visualization is performed according to the calculation results, the cloud map on the cross section is displayed, the inter-tube flow velocity, secondary side density, and void fraction on the heat transfer tube nodes are acquired through a three-dimensional space interpolation algorithm, and flow field distribution in the steam generator is quickly calculated and monitored according to the calculation formula for the heat transfer tube flow-induced vibration load and the inter-tube flow velocity, secondary side density, and void fraction acquired by interpolation.

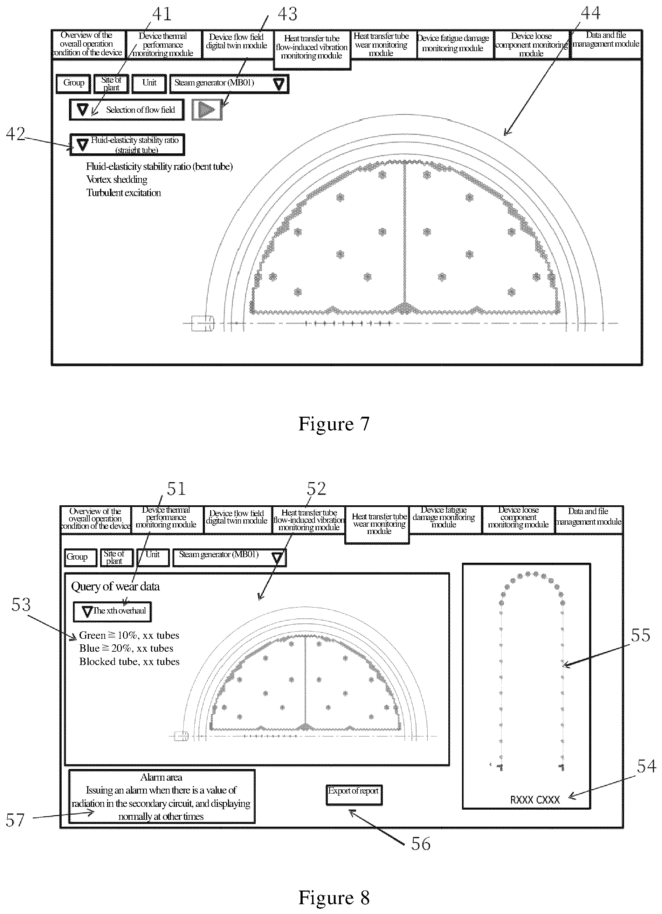

FIG. 7 shows the heat transfer tube flow-induced vibration monitoring module in the intelligent monitoring system for the steam generator according to the present invention. As shown in FIG. 7, in the heat transfer tube flow-induced vibration monitoring module, the flow field to be input is selected through the selection block (41), and the current flow field or the flow field calculated at any other time may be selected; the content to be calculated is selected through the selection block (42), such as the fluid-elasticity stability ratio of the bent tube-section, the fluid-elasticity stability ratio of the straight tube-section, vortex shedding or turbulent excitation; the button (43) is clicked to start the calculation; and a cloud map of the corresponding physical quantity is generated in the area (44).

In the heat transfer tube flow-induced vibration monitoring module, the fluid-elasticity stability ratio calculation method, turbulence excitation calculation method and vortex shedding calculation method are used to analyze the flow-induced vibration of the heat transfer tube to provide analysis results. Specific steps for the flow-induced vibration analysis are shown in the calculation flow chart of the heat transfer tube flow-induced vibration monitoring module in FIG. 14: Firstly, in step 1, the flow field digital twin module is called to calculate the result data, including the inter-tube flow velocity, fluid density and void fraction on the heat transfer tube nodes.

Secondly, in step 2, the heat transfer tube flow-induced vibration monitoring module employs ASME B&PVC (American Society of Mechanical Engineering, Boiler and Pressure Vessel Code) and calculation formulas of the critical damping ratio, effective flow velocity and critical flow velocity (Connors formula) to acquire results of the frequency and modal displacement of the heat transfer tube through a method of modal analysis, so as to complete the calculation of the fluid-elasticity stability ratio and generate an output file, including the results of effective flow velocities, critical flow velocities, damping ratios and fluid-elasticity stability ratios (ratio of effective flow velocity to critical flow velocity) of the straight tube-section and bent tube-section of the heat transfer tube.

The following formula is acquired according to modal analysis theory:

$$[M]\{\ddot{x}\} + [K]\{x\} = 0 \qquad (6)$$

In formula (6), [M] is the mass matrix; [K] is the stiffness matrix; $\{\ddot{x}\}$ is the acceleration vector; and $\{x\}$ is the displacement vector.

It is assumed that the solution of the above formula is: $\{x\} = \{\phi\}e^{i\omega t}$, and by substituting the above solution into the formula (6), the following characteristic equation is acquired:

$$\left([K] - \omega^2 [M]\right)\{\phi\} = 0 \ \text{ or } \ \det\left([K] - \lambda[M]\right) = 0 \qquad (7)$$

In formula (7), $\lambda = \omega^2$; for a system with N degrees of freedom, there are N natural frequencies ($\omega_j$, j = 1, 2, ..., N); and the eigenvector corresponding to the natural frequency $\omega_j$ is the modal shape.

The effective cross flow rate $U_{e,n}$ and the critical cross flow rate $U_{c,n}$ in the $n^{th}$ order mode are calculated as follows:

$$U_{e,n} = \sqrt{\frac{\sum\limits_{j=1}^{N} U_j^2 \phi_{jn}^2 \Delta z_j}{\sum\limits_{j=1}^{N} \phi_{jn}^2 \Delta z_j}} \qquad (8)$$

$$U_{c,n} = C_2 f_n D \left(\frac{m_o \delta}{\rho_o D^2}\right)^a \qquad (9)$$

and the fluid-elasticity stability ratio $FSR_n$ is as follows:

$$FSR_n = U_{e,n} / U_{c,n} \qquad (10)$$

In formula (10), D is the outer diameter of the heat transfer tube; $U_j$ is the cross flow rate at the node $j$; $\phi_{jn}$ is the modal displacement at the node j at the $n^{th}$ order natural frequency; $\Delta z_j$ is half of the sum of lengths of two adjacent units to which the node j belongs; N is the total number of nodes; $m_o$ is the reference mass per unit length of the structure; $\rho_o$ is the reference density of the secondary side fluid; $f_n$ is the $n^{th}$ order natural frequency; $\delta_n$ is the $n^{th}$ order logarithmic attenuation rate, $\delta_n = 2\pi\xi_n$, $\xi_n$ represents the damping ratio of the $n^{th}$ order mode; and $C_2$, $a$ are parameters determined by experiments.

Next, in step 3, the heat transfer tube flow-induced vibration monitoring module employs the ASME B&PVC and the empirical formula for structural displacement amplitude under turbulent excitation to complete the displacement amplitude calculation of the heat transfer tube under turbulent excitation based on the results of frequency, modal displacement and internal force of the heat transfer tube acquired by modal analysis of the heat transfer tube, and further complete the stress calculation of the heat transfer tube according to the calculation formula for material mechanics stress to generate an output file including the results of displacement and stress of the heat transfer tube under turbulent excitation.

The structural displacement response under turbulent excitation is calculated as follows:

$$y_{kn} = \sqrt{\sum_{i=1}^{M} \frac{L_i \phi_{kn}^2 (D/2)^2 C_R^2 \sum\limits_{0}^{L_i} \left(\rho_o U_j^2\right)^2 \phi_{jn}^2 \Delta z_j}{64 \pi^3 f_n^3 \xi \left(\sum\limits_{j=1}^{N} m_j \phi_{jn}^2 \Delta z_j\right)^2} \left(J_{nn}^i\right)^2} \qquad (11)$$

In formula (11), $y_{kn}$ is the displacement response at the node k in the $n^{th}$ order mode caused by turbulence excitation; M is the total number of spans; $L_i$ is the length of the $i^{th}$ span; $\phi_{kn}$ is the modal displacement at the node k in the $n^{th}$ order natural frequency; $m_j$ is the actual mass per unit length of the structure at the node $j$; $C_R$ is the random excitation coefficient, which is determined according to the recommended value for the oncoming flow cylinder in the ASME code; and $\left(J_{nn}^i\right)^2$ is the self-synthesis acceptance of the $i^{th}$ span, $\left(J_{nn}^i\right)^2 \approx l_c^i / L_i$, $l_c^i$ is the relevant length of the $i^{th}$ span, which is approximately 1 to 2 times the diameter D of the heat transfer tube.

The displacement response amplitude (RMS value) of the node *k* of the structure under turbulent excitation is calculated as follows:

$$y_k = \sqrt{\sum_{n=1}^{N} y_{kn}^2} \qquad (12)$$

The stress of the heat transfer tube under turbulent excitation is calculated as follows:

$$\sigma_{kn} = \frac{y_{n\max}}{\phi_n^*} \left( \frac{F_{xkn}}{A_t} + \frac{M_{ykn}D}{2I_y}\sin\theta - \frac{M_{zkn}D}{2I_z}\cos\theta \right) \qquad (13)$$

In formula (13), $\sigma_{kn}$ is the heat transfer tube stress at the node k in the $n^{th}$ order mode under turbulent excitation; $y_{n\max}$ is the maximum value of the displacement response $y_{kn}$ of each node in the $n^{th}$ order mode caused by turbulent excitation; $\phi_n^*$ is the maximum normalized modal displacement in the $n^{th}$ order mode; $A_t$ is the cross-sectional area of the heat transfer tube; $F_{xkn}$ is the axial force of the heat transfer tube at the node k in the $n^{th}$ order mode; $M_{ykn}$ is the bending moment of the cross section of the heat transfer tube in the Y direction at the node k in the $n^{th}$ order mode; $I_y$ is the moment of inertia of the cross section of the heat transfer tube in the Y direction; $\theta$ is the angle of the cross section of the heat transfer tube; $M_{zkn}$ is the bending moment of the cross section of the heat transfer tube in the Z direction at the node k in the $n^{th}$ order mode; and $I_z$ is the moment of inertia of the cross section of the heat transfer tube in the Z direction. The stress amplitude (RMS value) of the node *k* of the heat transfer tube caused by turbulent excitation is calculated as follows:

$$\sigma_k = \sqrt{\sum_{n=1}^{N} \sigma_{kn}^2} \qquad (14)$$

Finally, in step 4, the heat transfer tube flow-induced vibration monitoring module employs the ASME B&PVC and the structural displacement amplitude formula under vortex shedding excitation to complete the displacement amplitude calculation of the heat transfer tube under vortex shedding based on results of the frequency, modal displacement and internal force of the heat transfer tube acquired by the heat transfer tube modal analysis, and further complete the stress calculation of the heat transfer tube according to the material mechanics stress calculation formula to generate an output file including results of the displacement and stress of the heat transfer tube under vortex shedding excitation.

The vortex periodically and alternately separates from both sides of the heat transfer tube, forming an alternating lift on the tube, and its frequency can be expressed as:

$$f_s = S_t \frac{U_o}{D} \qquad (15)$$

In formula (15), $S_t$ is the Strouhal number; and $U_o$ is the reference velocity of the secondary side fluid.

When the structural frequency $f_n$ of the heat transfer tube falls within a range of $0.7f_s \leq f_n \leq 1.3f_s$, the vortex shedding frequency $f_s$ is locked at the natural frequency $f_n$. If $f_n$ is not within this range, the structural response caused by vortex shedding is very small. When the frequency is locked, the ASME B&PVC proposes three semi-empirical formulas for calculating the structural displacement amplitude:

$$y_n^* = \frac{1.29D\gamma}{\left[1 + 0.43\left(2\pi S_t^2 C_n\right)\right]^{3.35}} \qquad (16)$$

$$y_n^* = \frac{0.07D\gamma}{(C_n + 1.9)S_t^2} \sqrt{0.3 + \frac{0.72}{(C_n + 1.9)S_t}} \qquad (17)$$

$$y_n^* = \frac{0.32D\gamma}{\sqrt{0.06 + \left(2\pi S_t^2 C_n\right)^2}} \qquad (18)$$

In the above formulas, $\gamma$ is the modal coefficient, which usually varies between 1.0 and 1.3; and $C_n$ is the reduced damping in the nth order mode, which is calculated as follows:

$$C_n = \frac{4\pi\xi\sum_{j=1}^{N} m_j \phi_{jn}^2 \Delta z_j}{\rho_o D^2 \sum_{L_b} \phi_{jn}^2 \Delta z_j} \qquad (19)$$

In formula (19), $L_b$ represents that the integration area runs within a length of one span from the bottom of the hot section and the cold section.

The stress of the heat transfer tube under vortex shedding excitation is calculated as follows:

$$\sigma_{kn}^* = \frac{y_n^*}{\phi_n^*}\left(\frac{F_{xkn}}{A_t} + \frac{M_{ykn}D}{2I_y}\sin\theta - \frac{M_{zkn}D}{2I_z}\cos\theta\right) \qquad (20)$$

In formula (20), $\sigma_{kn}^*$ is the heat transfer tube stress at the node k in the nth mode caused by vortex shedding.

The stress amplitude (RMS value) of the node $k$ of the heat transfer tube caused by vortex shedding excitation is calculated as follows:

$$\sigma_k^* = \sqrt{\sum_{n=1}^{N} \sigma_{kn}^{*\,2}} \qquad (21)$$

FIG. 8 shows the heat transfer tube wear monitoring module in the intelligent monitoring system for the steam generator according to the present invention. As shown in FIG. 8, in the heat transfer tube wear monitoring module, the required data such as the heat transfer tube wear amount and the wear position offset amount, which is acquired during each overhaul, is inputted. In the heat transfer tube wear monitoring module, the time (e.g., next overhaul or end of life) is selected through the selection block (51); the wear condition cloud map of the heat transfer tube is displayed in the area (52); the specific number and details of heat transfer tubes with different wear amounts are displayed in the area (53); the row number and column number of the heat transfer tube to be viewed are entered in the textbox (54), and the wear condition of the heat transfer tube is displayed in the area (55); the report related to the heat transfer tube wear condition can be exported by clicking the button (56); and when there is a value of the secondary circuit radiation, an alarm is issued in the area (57).

In the heat transfer tube wear monitoring module, the subsequent wear condition of the heat transfer tube is predicted and analyzed, and a recommended method for tube blockage is provided. The specific analysis steps of the wear prediction algorithm are shown in FIG. 15:

(1) In step S151, based on the inspection data of each overhaul, data of the wear depth, wear length and wear morphology of each heat transfer tube with wear are entered into the wear database to form a data table.

(2) In step S152, based on the differences in the wear depth, the wear length and the wear morphology, a geometric method is used to calculate the relationship between the wear depth and the wear volume at each type of wear point, and the wear depth is converted into a wear volume loss.

(3) In step S153, assuming that the wear volume growth rate of one wear point per unit time is constant, the volume loss rate is calculated based on the amount and time of the wear volume loss that has occurred.

(4) In step S154, the following calculation is performed: volume loss at end of next cycle = existing volume loss + volume loss rate * time + volume loss measurement uncertainty. The uncertainty of volume measurement depends on the calibration test of the vortex detection of the heat transfer tube.

(5) In step S155, based on the geometric relationship between the wear depth and the wear volume acquired in step 2 and the volume loss at the end of the next cycle acquired in step 4, the wear depth of each heat transfer tube at the end of the next cycle is calculated.

(6) In step S156, a recommended method for tube blockage is provided based on the principle for tube blockage used in nuclear power plants. If the calculated wear depth at the end of the next cycle of the heat transfer tube is greater than the depth limit given in the principle for tube blockage, it is recommended to block the heat transfer tube. The principle for tube blockage may be the *In-Service Inspection Program* of the nuclear power plant itself, or the tube blockage limit of 40% in the ASME B&PVC Volume XI, or the maximum allowable wear depth calculated based on the ultimate explosive pressure, or other standards set by the nuclear power plant itself.

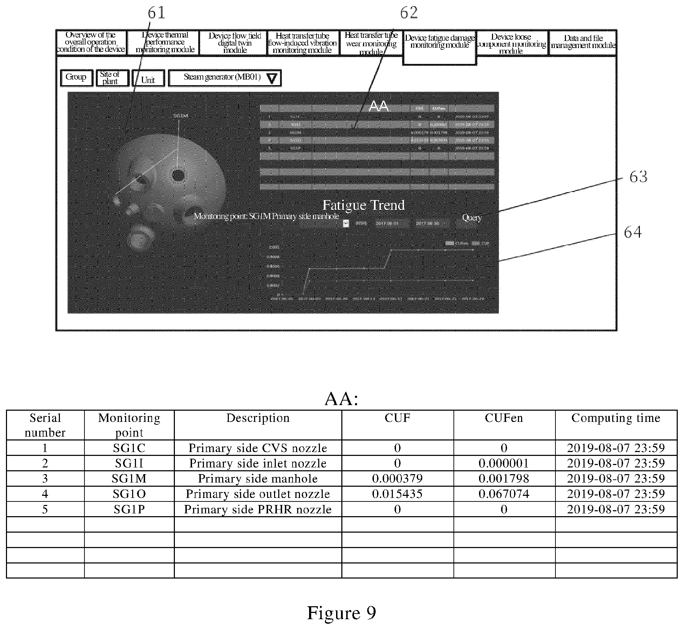

FIG. 9 shows the device fatigue damage monitoring module in the intelligent monitoring system for the steam generator according to the present invention. As shown in FIG. 9, in the device fatigue damage monitoring module, the required fatigue accumulation factors of respective components are imported by the fatigue monitoring system installed in the nuclear power plant.

In the device fatigue damage monitoring module, a three-dimensional view of the water chamber head of the steam generator is displayed in the area (61), and positions of the fatigue monitoring points are marked in the view; the fatigue damage factor value of the monitoring point is displayed in the area (62), including serial number, monitoring point, description, CUF, EAF, calculation time, status and other information, and the fatigue factor is monitored and alarmed. After selecting the corresponding position and time in the selection block (63), the historical curve for the fatigue damage factor can be displayed in the area (64).

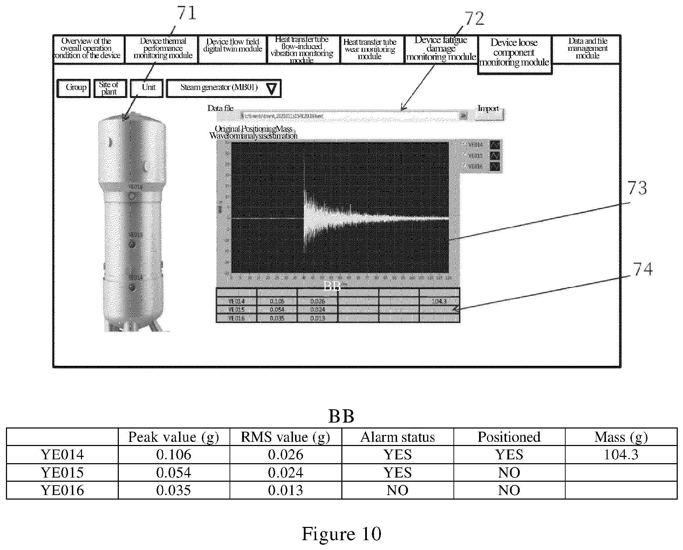

FIG. 10 shows the device loose component monitoring module in the intelligent monitoring system for the steam generator according to the present invention. As shown in FIG. 10, in the device loose component monitoring module, the required loose component signals of respective positions are imported by the loose component monitoring system installed in the nuclear power plant.

In the device loose component monitoring module, a three-dimensional view of the steam generator is displayed in the area (71), and the sensor position of the loose component is marked. When a loose component alarm event occurs, the position of the sensor measure point triggering the alarm is displayed in red; in the selection block (72), the recorded alarm event data for loose components is selected to import the data, and after the importing, loose component analysis is performed on the data automatically, including loose component alarm status analysis, loose component positioning calculation and loose component mass calculation; in the area (73), the original waveform, positioning analysis or mass estimation is selected to acquire the corresponding analysis results; in the area (74), the corresponding waveform graph or other result graphs are displayed, and the analysis result table is displayed.

In the device loose component monitoring module, the specific analysis steps for determining the location of loose component are shown in FIG16:

(1) In step S161, the short-time root mean square value (RMS) of the recorded alarm event data is calculated, and the calculated RMS is compared with the threshold to determine whether to alarm. If the RMS is greater than or equal to the threshold, no alarm is issued; and if the RMS is less than the energy threshold, the process proceeds to step (2).

(2) In step S162, the amplitude probability density function $\rho$ of the recorded alarm event data is calculated, a correlation analysis is performed on the $\rho$ and the probability density function $\rho_s$ of the standard signal, and $\rho$ is compared with the threshold $\rho_s$. If $p < \rho_s$, it is considered that the signal is not a collision signal and an alarm is not triggered; and if $p \geq \rho_s$, an alarm is issued.

(3) In step S163, for the alarm signal, scanning is performed on a spherical shell to achieve positioning according to the wave velocity calculation formula on the spherical shell.

(4) In step S164, Fourier spectrum analysis is performed on the alarm signal, and the mass of the loose component is estimated with the spectrum of the collision signal using the characteristics that collision signals of loose components with different masses correspond to different Fourier spectra.

In the data and file management module, the data and file management module is the data storage module of the monitoring system, which records the relevant data of the steam generator in the design, manufacturing and operation stages. The design drawings, design specifications, maintenance manuals in the design stage, the completion drawings, completion reports, maintenance manuals in the manufacturing stage, and the operating procedures, in-service inspection reports and other contents in the operation stage can be called for providing a more convenient path for operators to check relevant contents.

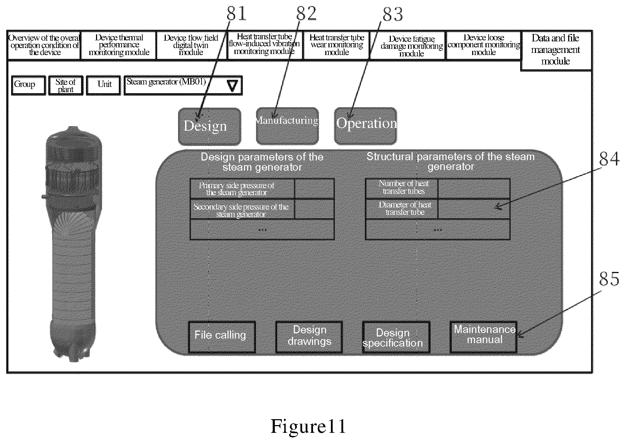

FIG. 11 shows the data and file management module in the intelligent monitoring system for the steam generator according to the present invention. As shown in FIG. 11, in the data and file management module, various parameters of the steam generator in the design stage can be viewed through the button (81), various parameters of the steam generator in the manufacturing stage that need to be tracked can be viewed through the button (82), and various parameters of the steam generator during operation that need to be tracked can be viewed through the button (83); the corresponding parameter values and tables are displayed in the area (84); and the area (85) shows the documents related to the steam generator in each stage, which are design drawings, design specifications, and maintenance manuals in the design stage, completion drawings, completion reports, and maintenance manuals in the manufacturing stage, and operation procedures and in-service inspection reports in the operation stage, and the relevant documents can be called by clicking the corresponding button for viewing.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Although the above describes the specific implementations of the present invention in conjunction with the accompanying drawings, it is not intended to limit the scope of protection of the present invention. Those skilled in the art should understand that various modifications or variations that can be made by those skilled in the art on the basis of the technical solution of the present invention without creative work are still within the scope of protection of the present invention.

## Claims

1. An intelligent monitoring method for a steam generator of a nuclear power plant, comprising the following steps:

   acquiring data from several sensor measure points in the steam generator;
   performing thermal performance calculation on the data acquired from each sensor measure point, and outputting secondary side data after calculation;
   comparing the secondary side data output after calculation with a measured value of steam at a secondary side outlet to determine whether a potential fault exists in an operation process of the steam generator;
   performing flow field distribution calculation on the secondary side data output after the thermal performance calculation, calculating a secondary side flow field of a tube bundle area of the steam generator, and outputting flow field data after calculation;
   performing a flow-induced vibration analysis of a heat transfer tube on the secondary side data output after the thermal performance calculation and the output flow field data acquired after the flow field calculation to acquire by calculation a result of the flow-induced vibration analysis, wherein the result of the flow-induced vibration analysis comprises but is not limited to effective flow velocities, critical flow velocities, damping ratios, and fluid-elasticity stability ratios of a straight tube-section and a bent tube-section of the heat transfer tube; and
   performing a prediction analysis with a wear prediction algorithm on a subsequent wear condition of the heat transfer tube, and providing a recommended method for tube blockage,
   all data being allowed to be visualized.

2. The intelligent monitoring method for a steam generator of a nuclear power plant according to claim 1, wherein the data of each sensor measure point comprises but is not limited to thermal power, as well as temperature, pressure, and flow rate of a primary circuit, and water level, feedwater temperature, outlet steam pressure, flow rate, and blowdown flow rate of the secondary side.

3. The intelligent monitoring method for a steam generator of a nuclear power plant according to claim 1, wherein the secondary side data output after the thermal performance calculation comprises secondary side steam space pressure, secondary side inlet flow rate and temperature, and secondary side heat exchange amount distribution data, and more specifically, the output data comprises but is not limited to outlet steam pressure, flow rate, fouling coefficient, circulation ratio, the secondary side heat exchange amount, as well as pressures, flow rates and temperatures of a primary side and the secondary side.

4. The intelligent monitoring method for a steam generator of a nuclear power plant according to claim 1, wherein input data of the flow field distribution calculation comprises inlet and outlet parameters of the steam generator, as well as secondary side steam pressure, secondary side inlet flow rate and temperature, secondary side heat exchange amount distribution data, circulation ratio, steam space pressure, and descending channel inlet temperature acquired by the thermal performance calculation; and the output data of the flow field distribution calculation comprises but is not limited to distribution results of the secondary side flow field and a temperature field.

5. The intelligent monitoring method for a steam generator of a nuclear power plant according to claim 1, wherein the flow field distribution calculation comprises following steps:

firstly, calculating flow field data of the steam generator under different input data in advance as sample data;

secondly, performing flow mode decomposition based on the sample data to acquire by calculation a finite-order orthogonal basis as a flow mode;

thirdly, acquiring by calculation a new orthogonal basis by Kelkien interpolation or inverse distance interpolation according to the secondary side data output after the thermal performance calculation; and

fourthly, recombining the flow modes to acquire by calculation the distribution results of the secondary side flow field and the temperature field.

6.  The intelligent monitoring method for a steam generator of a nuclear power plant according to claim 1, wherein the flow-induced vibration analysis comprises following steps:

firstly, establishing a heat transfer tube analysis model according to a result of the flow field data;

secondly, performing a modal analysis based on a built-in solver;

thirdly, performing calculation of the fluid-elasticity stability ratio to acquire a calculation result of the fluid-elasticity stability ratio, comprising but not limited to the effective flow velocity, the critical flow velocity, the damping ratio, and the fluid-elasticity stability ratio;

fourthly, calculating turbulence excitation to acquire a calculation result of the turbulence excitation, comprising but not limited to displacement and stress; and

fifthly, calculating vortex shedding to acquire a calculation result of vortex shedding amount, comprising but not limited to displacement and stress.

7.  The intelligent monitoring method for a steam generator of a nuclear power plant according to claim 1, further comprising:

determining a position of a loose component in the steam generator according to imported loose component signals of respective positions in the steam generator; and

consulting data files, which comprise but are not limited to relevant data of the steam generator in design, manufacturing and operation stages.

8.  An intelligent monitoring system for a steam generator of a nuclear power plant, comprising:

several sensors, configured to acquire data of measure points in the steam generator;

a device thermal performance detection module, configured to perform thermal performance calculation on the data acquired from each sensor measure point and output secondary side data after calculation, and is capable of comparing the secondary side data output after calculation with a measured value of steam at a secondary side outlet to determine whether a potential fault exists in an operation process of the steam generator;

a device flow field digital twin module, configured to perform flow field distribution calculation on the secondary side data output after the thermal performance calculation, calculate a secondary side flow field of a tube bundle area of the steam generator, and output flow field data after calculation;

a heat transfer tube flow-induced vibration monitoring module, configured to perform a flow-induced vibration analysis of a heat transfer tube on the secondary side data output after the thermal performance calculation and the output flow field data acquired after the flow field calculation to acquire by calculation a result of the flow-induced vibration analysis, wherein the result of the flow-induced vibration analysis comprises but is not limited to effective flow velocities, critical flow velocities, damping ratios, and fluid-elasticity stability ratios of a straight tube-section and a bent tube-section of the heat transfer tube; and

a heat transfer tube wear monitoring module, configured to perform a prediction analysis with a wear prediction algorithm on a subsequent wear condition of the heat transfer tube, and provide a recommended method for tube blockage,

all data being allowed to be visualized.

9.  The intelligent monitoring system for a steam generator of a nuclear power plant according to claim 8, wherein the data of each sensor measure point comprises but is not limited to thermal power, as well as temperature, pressure, and flow rate of a primary circuit, and water level, feedwater temperature, outlet steam pressure, flow rate, and blowdown flow rate of the secondary side.

10.  The intelligent monitoring system for a steam generator of a nuclear power plant according to claim 8, wherein the secondary side data output by the device thermal performance detection module comprises secondary side steam space pressure, secondary side inlet flow rate and temperature, and secondary side heat exchange amount distribution data, and more specifically, the output data comprises but is not limited to outlet steam pressure, flow rate, fouling coefficient, circulation ratio, the secondary side heat exchange amount, as well as pressures, flow rates and temperatures of a primary side and the secondary side.

11. The intelligent monitoring system for a steam generator of a nuclear power plant according to claim 8, wherein input data of the flow field distribution calculation comprises inlet and outlet parameters of the steam generator, as well as secondary side steam pressure, secondary side inlet flow rate and temperature, secondary side heat exchange amount distribution data, circulation ratio, steam space pressure, and descending channel inlet temperature acquired by the thermal performance calculation; and the output data of the flow field distribution calculation comprises but is not limited to distribution results of the secondary side flow field and a temperature field.

12. The intelligent monitoring system for a steam generator of a nuclear power plant according to claim 11, wherein the flow field distribution calculation comprises following steps:

firstly, calculating flow field data of the steam generator under different input data in advance as sample data;
secondly, performing flow mode decomposition based on the sample data to acquire by calculation a finite-order orthogonal basis as a flow mode;
thirdly, acquiring by calculation a new orthogonal basis by Kelkien interpolation or inverse distance interpolation according to the secondary side data output after the thermal performance calculation; and
fourthly, recombining the flow modes to acquire by calculation the distribution results of the secondary side flow field and the temperature field.

13. The intelligent monitoring system for a steam generator of a nuclear power plant according to claim 8, wherein the flow-induced vibration analysis comprises following steps:

firstly, establishing a heat transfer tube analysis model according to a result of the flow field data;
secondly, performing a modal analysis based on a built-in solver;
thirdly, performing calculation of the fluid-elasticity stability ratio to acquire a calculation result of the fluid-elasticity stability ratio, comprising but not limited to the effective flow velocity, the critical flow velocity, the damping ratio, and the fluid-elasticity stability ratio;
fourthly, calculating turbulence excitation to acquire a calculation result of the turbulence excitation, comprising but not limited to displacement and stress; and
fifthly, calculating vortex shedding to acquire a calculation result of vortex shedding amount, comprising but not limited to displacement and stress.

14. The intelligent monitoring system for a steam generator of a nuclear power plant according to claim 8, further comprising:
a device loose-component monitoring module, configured to determine a position of a loose component in the steam generator according to imported loose component signals of respective positions in the steam generator.

15. The intelligent monitoring system for a steam generator of a nuclear power plant according to claim 8, further comprising:

a device fatigue damage monitoring module, whose required fatigue accumulation factors of respective components are imported by a fatigue monitoring system installed in the nuclear power plant; and
a data and file management module, which is a data storage module of the intelligent monitoring system and is configured to record relevant data of the steam generator in design, manufacturing and operation stages.

Thermal power, and
temperature,
pressure, and flow
rate of the primary
circuit

Secondary side
water level,
feedwater
temperature, outlet
steam pressure,
flow rate

Blowdown flow rate

RCS system · SGS system · BDS system

Device thermal
performance
monitoring module

Secondary side
steam pressure,
secondary side inlet
flow rate and
temperature,
secondary side heat
transfer amount

Device flow field
digital twin module

Inter-tube flow
velocity, fluid density,
and void fraction

Heat transfer tube
flow-induced vibration
monitoring module

Vortex detection data
from previous overhauls

Fatigue monitoring
system database

Loose component
monitoring system
database

Heat transfer tube
wear monitoring
module

Device fatigue
damage monitoring
module

Device loose
component
monitoring module

Wear depth of each heat
transfer tube at the end
of the next cycle

Fatigue damage factor of
water chamber head
of the steam generator

Position and mass of
loose component

Figure 1

Input:
*Primary side
temperature
*Feedwater temperature
*Primary side flow rate
and pressure
*Thermal load
*Fouling coefficient, etc.

THETA
Operation
mode 1

Output:
*Steam outlet pressure
*Steam flow rate
*Circulation ratio
*Thermal load
*andso on

Input:
*Primary side flow rate
and temperature
*Feedwater temperature
*Steam pressure
*Thermal load
*andso on

THETA
Operation
mode 6

Output:
*Steam flow rate
*Circulation ratio
*Fouling coefficient
*andso on

Measured data
of power plants

Comparing with
predicted values to
determine the actual
operating status of
the steam generator

Proposing perfor-m
ance parameters
such as circulation
ratio

Measured data of
power plants

Extractingfouling
coefficient

Figure 2

Inputting sample data (database, obtained from CFD calculation or measurement data)

Acquiring output parameters (flow field and temperature field of the region of interest)

Constructing sample matrix based on sample data

Inputting parameters (thermal hydraulic measurement data)

Performing interpolation to acquire the POD basis coefficientcorresponding to the input parameter

Performing singular value decomposition on the sample matrix

Extracting the POD basis based on singular values

Calculating POD basis coefficients corresponding to the sample parameters

Figure 3

11     00

| Overview of the overall operation condition of the device | Device thermal performance monitoring module | Device flow field digital twin module | Heat transfer tube flow-induced vibration monitoring module | Heat transfer tube wear monitoring module | Device fatigue damage monitoring module | Device loose component monitoring module | Data and file management module |

Group | Site of plant | Unit | Steam generator（MB01）▼

01

| Area ▼ | Row ▼ | Column ▼ |
| Straight tube-section | | |
| Fluid-elasticity stability ratio | Result | |
| Vortex shedding | Result | |
| Turbulent excitation | Result | |

Flow-induced vibration ▷

Outlet steam pressure

15

12

Fouling coefficient ▷ | Numerical value

Outlet steam flow rate

13

Maximum monitoring mass of loose components | Numerical value

Coolant inlet flow rate

14

Alarm area
Issuing an alarm and displaying abnormal condition when any module is abnormal, and displaying normal condition whenall module are normal

Main feedwater flow rate

Figure 4

21

| Overview of the overall operation condition of the device | Device thermal performance monitoring module | Device flow field digital twin module | Heat transfer tube flow-induced vibration monitoring module | Heat transfer tube wear monitoring module | Device fatigue damage monitoring module | Device loose component monitoring module | Data and file management module |
|---|---|---|---|---|---|---|---|

Group | Site of plant | Unit | Steam generator (MB01) ▽

Data is displayed in real time, with real-time 1-hour curve displayed below the mouse after hovering over it, and start and end times are customizable

Outlet pressure xxx MPa

Outlet flow rate xxx t/h

Feedwater temperature, ℃

Height of water level xxx m

Fouling coefficient

Circulation ratio

Blowdown flow rate xxx t/h

Inlet temperature

Operating pressure xxx MPa

Pump flow rate xxx t/h

Debug button for iterating the fouling coefficient

Diagnosis button for generating fouling coefficient, circulation ratio prediction value, and SG performance/alarm, upon pressing

Displaying thermal performance/alarm information of the steam generator

Outlet steam pressure

Coolant inlet flow rate

Outlet steam flow rate

Main feedwater flow rate

23

24

22

**Figure 5**

31          34          35

| Overview of the overall operation condition of the device | Device thermal performance monitoring module | Device flow field digital twin module | Heat transfer tube flow-induced vibration monitoring module | Heat transfer tube wear monitoring module | Device fatigue damage monitoring module | Device loose component monitoring module | Data and file management module |
|---|---|---|---|---|---|---|---|

Group | Site of plant | Unit | Steam generator (MB01) ▽

Overview of secondary side flow field (temperature field, void fraction field, density field)

☑ Custom Time
March 1, 202200:00:00

☐ Real time

Secondary side custom section
Section 1: Center: X Y Z
Normal vector: X Y Z
Section 2: Center: X Y Z
Normal vector: X Y Z

33

Velocity Magnitude (m/s)

Velocity Magnitude (m/s)

Velocity Magnitude (m/s)

Velocity Magnitude (m/s)

38

32

Physical quantity selection block (flow rate, temperature, void fraction, density)

Fig. 1: physical quantity selection block (flow rate, temp., void fraction, density)

Fig. 2: Physical quantity selection block (flow rate, temp., void fraction, density)

36          37

**Figure 6**

Figure 7

Figure 8

AA:

| Serial number | Monitoring point | Description | CUF | CUFen | Computing time |
|---|---|---|---|---|---|
| 1 | SG1C | Primary side CVS nozzle | 0 | 0 | 2019-08-07 23:59 |
| 2 | SG1I | Primary side inlet nozzle | 0 | 0.000001 | 2019-08-07 23:59 |
| 3 | SG1M | Primary side manhole | 0.000379 | 0.001798 | 2019-08-07 23:59 |
| 4 | SG1O | Primary side outlet nozzle | 0.015435 | 0.067074 | 2019-08-07 23:59 |
| 5 | SG1P | Primary side PRHR nozzle | 0 | 0 | 2019-08-07 23:59 |
|  |  |  |  |  |  |
|  |  |  |  |  |  |
|  |  |  |  |  |  |
|  |  |  |  |  |  |

Figure 9

EP 4 592 592 A1

BB

|  | Peak value (g) | RMS value (g) | Alarm status | Positioned | Mass (g) |
|---|---|---|---|---|---|
| YE014 | 0.106 | 0.026 | YES | YES | 104.3 |
| YE015 | 0.054 | 0.024 | YES | NO | |
| YE016 | 0.035 | 0.013 | NO | NO | |

Figure 10

Figure11

Figure 12

Primary side flow rate/pressure/temperature, secondary side feedwater temperature, heat transfer power Measured values →

Calculated value of secondary side outlet steam

Is the steam pressure too low?
Is the humidity of the outlet steam too high? → Fault analysis

Measured value of secondary side outlet steam

Figure 13

Determining the position of the heat transfer tube (row number, column number)

↓

Reading the geometric structure data of built-in heat transfer tubes

↓

Establishing a heat transfer tube analysis model

↓

Calling the built-in solver for modal analysis

Step 1:
Calling the flow field data twin module to calculate result data (inter-tube flow velocity, fluid density, and void fraction of the secondary side on heat transfer tube nodes)

Modal calculation results (frequency, modal displacement, internal force)

Step 2:
Calling the module to calculate the fluid-elasticity stability ratio

↓

Calculation results of fluid-elasticity stability ratio (effective flow velocity, critical flow velocity, damping ratio, fluid-elasticity stability ratio)

Step 3:
Calling the module to perform turbulence excitation calculation

↓

Calculation results of turbulent excitation (displacement and stress)

Step 4:
Calling the module to perform vortex shedding calculation

↓

Calculation results of vortex shedding (displacement and stress)

Figure 14

Entering data of the wear depth, wear length and wear morphology of heat transfer tubes into the wear database to form a data table — S151

Calculating the relationship between the wear depth and the wear volume, and converting the wear depth into a wear volume loss — S152

Calculating the volume loss rate — S153

The volume loss at end of next cycle — S154

Calculating the wear depth of each heat transfer tube at the end of the next cycle — S155

Providing a recommended method for tube blockage — S156

Figure 15

Recording alarm data, and calculating the short-time root mean square value RMS ⟶ S161

If RMS ≥ threshold, no alarm is issued, and monitoring is continued

Comparing the short-time root mean square value RMS with the threshold

If the RMS is less than the threshold

Calculating the amplitude probability density function ρ of the alarm data ⟶ S162

If ρ<ρ_s, no alarm is issued, and monitoring is continued

Comparing the amplitude probability density function ρ with the probability density function ρ_s of the standard signal

ρ>ρ_s

Performing scanning to achieve alarm positioning according to the wave velocity calculation formula ⟶ S163

Performing Fourier spectrum analysis to estimate the mass of the loose component ⟶ S164

Figure 16

## INTERNATIONAL SEARCH REPORT

| International application No. |
|---|
| **PCT/CN2023/119624** |

### A. CLASSIFICATION OF SUBJECT MATTER

F22B35/18(2006.01)i

According to International Patent Classification (IPC) or to both national classification and IPC

### B. FIELDS SEARCHED

Minimum documentation searched (classification system followed by classification symbols)

IPC:F22B

Documentation searched other than minimum documentation to the extent that such documents are included in the fields searched

Electronic data base consulted during the international search (name of data base and, where practicable, search terms used)

CNKI, CNTXT, VEN, CNABS, ENTXT, DWPI: 蒸汽, 发生器, 监测, 流致, 振动, 磨损, 疲劳, 预警, steam+, generat+, monitor +, flow+ w induced, vibrat+, wear, fatigu+, predict+

### C. DOCUMENTS CONSIDERED TO BE RELEVANT

| Category* | Citation of document, with indication, where appropriate, of the relevant passages | Relevant to claim No. |
|---|---|---|
| PX | CN 115539933 A (SHANGHAI NUCLEAR ENGINEERING RESEARCH AND DESIGN INSTITUTE CO., LTD.) 30 December 2022 (2022-12-30) description, paragraphs [0025]-[0097], and figures 1-11 | 1-4, 6-11, 13-15 |
| A | CN 108170924 A (XI'AN JIAOTONG UNIVERSITY) 15 June 2018 (2018-06-15) entire document | 1-15 |
| A | CN 109443964 A (LINGDONG NUCLEAR POWER CO., LTD. et al.) 08 March 2019 (2019-03-08) entire document | 1-15 |
| A | CN 111859752 A (XI'AN JIAOTONG UNIVERSITY) 30 October 2020 (2020-10-30) entire document | 1-15 |
| A | JP 2008249580 A (HITACHI LTD.) 16 October 2008 (2008-10-16) entire document | 1-15 |
| A | KR 20090022448 A (KOREA HYDRO & NUCLEAR POWER CO., LTD.) 04 March 2009 (2009-03-04) entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/119624**

| C. | DOCUMENTS CONSIDERED TO BE RELEVANT |  |
|---|---|---|
| Category* | Citation of document, with indication, where appropriate, of the relevant passages | Relevant to claim No. |
| A | KR 20140033906 A (KOREA HYDRO & NUCLEAR POWER CO., LTD.) 19 March 2014 (2014-03-19) entire document | 1-15 |

Form PCT/ISA/210 (second sheet) (July 2022)

**INTERNATIONAL SEARCH REPORT**
Information on patent family members

| International application No. |
| --- |
| **PCT/CN2023/119624** |

| Patent document cited in search report | | | Publication date (day/month/year) | Patent family member(s) | | | Publication date (day/month/year) |
| --- | --- | --- | --- | --- | --- | --- | --- |
| CN | 115539933 | A | 30 December 2022 | None | | | |
| CN | 108170924 | A | 15 June 2018 | None | | | |
| CN | 109443964 | A | 08 March 2019 | None | | | |
| CN | 111859752 | A | 30 October 2020 | None | | | |
| JP | 2008249580 | A | 16 October 2008 | JP | 4705066 | B2 | 22 June 2011 |
| KR | 20090022448 | A | 04 March 2009 | KR | 100913669 | B1 | 25 August 2009 |
| KR | 20140033906 | A | 19 March 2014 | KR | 101403347 | B1 | 03 June 2014 |

Form PCT/ISA/210 (patent family annex) (July 2022)